# EUROPEAN PATENT SPECIFICATION

(11) **EP 2 868 006 B1**
(45) Date of publication and mention of the grant of the patent: **21.03.2018**
(21) Application number: 13736693.6
(22) Date of filing: 24.06.2013
(51) Int. Cl.: H04L 1/00, H04L 1/06, H04L 25/03

(54) **SYSTEMS AND METHODS FOR ENHANCED WIRELESS COMMUNICATION FRAMES**
SYSTEME UND VERFAHREN FÜR VERBESSERTE DRAHTLOSE KOMMUNIKATIONSFRAMES
SYSTÈMES ET PROCÉDÉS POUR DES TRAMES DE COMMUNICATION SANS FIL AMÉLIORÉES

(30) Priority: 02.07.2012 US 201261667347 P; 21.06.2013 US 201313923977
(43) Date of publication of application: 06.05.2015
(73) Proprietor: Qualcomm Incorporated, San Diego, CA 92121-1714 (US)
(72) Inventor: ASTERJADHI, Alfred, San Diego, California 92121-1714 (US); MERLIN, Simone, San Diego, California 92121-1714 (US); JAFARIAN, Amin, San Diego, California 92121-1714 (US)
(74) Representative: Wegner, Hans
(86) International application number: PCT/US2013/047356
(87) International publication number: WO 2014/008025

(56) References cited:
- US-A1- 2011 179 335
- US-B1- 7 317 735

## Description

### BACKGROUND

### Field

The present application relates generally to wireless communications, and more specifically to systems, methods, and devices to enable wireless communication in sub-gigahertz bands. Certain aspects herein relate to repurposing of a service field in a physical layer header of a wireless communication frame.

### Background

In many telecommunication systems, communications networks are used to exchange messages among several interacting spatially-separated devices. Networks may be classified according to geographic scope, which could be, for example, a metropolitan area, a local area, or a personal area. Such networks may be designated respectively as a wide area network (WAN), metropolitan area network (MAN), local area network (LAN), or personal area network (PAN). Networks also differ according to the switching/routing technique used to interconnect the various network nodes and devices (e.g., circuit switching vs. packet switching), the type of physical media employed for transmission (e.g., wired vs. wireless), and the set of communication protocols used (e.g., Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

Document US 7,317,735 B1 discloses a method and system which include the creation and transmission of a MAC header that includes a first MAC header portion and at least two scrambler recovery fields arranged on the two sides (before and after) of a header FEC portion.

### SUMMARY

The invention is defined in the independent claims 1, 8 and 15. The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include providing wireless communication in sub-gigahertz bands for low power and long distance wireless communications.

One aspect of the disclosure provides an implementation of a method for communicating in a wireless network. The method includes generating a wireless communication frame comprising a physical header and a media access control header, the physical header including a service field having a contents. The contents define an error detection value, and transmitting the wireless communication frame.

Another aspect of the disclosure is an apparatus for communicating on a wireless network. The apparatus includes a processor configured to generate a wireless communication frame comprising a physical header and a media access control header, the physical header including a service field having a contents. The contents define an error detection value, and a transmitter configured to transmit the wireless communication frame.

Another aspect of the disclosure is an apparatus for communicating on a wireless network. The apparatus includes a means for generating a wireless communication frame comprising a physical header and a media access control header, the physical header including a service field having a contents. The contents define an error detection value. The apparatus also includes a means for transmitting the wireless communication frame.

Another aspect disclosed is a non-transitory, computer readable media comprising instructions that when executed cause a processor to perform the method of generating a wireless communication frame comprising a physical header and a media access control header, the physical header including a service field having a contents, where the contents define an error detection value, and transmitting the wireless communication frame.

Another aspect disclosed is a method of communicating in a wireless network, the method includes receiving a wireless communication frame comprising a physical header and a media access control header, the physical header including a service field having a contents, where the contents define an error detection value, and determining an absence of errors in the wireless communication frame based at least in part on the error detection value.

Another aspect disclosed is an apparatus for communicating in a wireless network. The apparatus includes a receiver configured to receive a wireless communication frame comprising a physical header and a media access control header, the physical header including a service field having a contents, where the contents define an error detection value, and a processor configured to determine an absence of errors in the wireless communication frame based at least in part on the error detection value.

Another aspect disclosed is an apparatus for communicating in a wireless network. The apparatus includes means for receiving a wireless communication frame comprising a physical header and a media access control header, the physical header including a service field having a contents, where the contents define an error detection value, and a means for determining an absence of errors in the wireless communication frame based at least in part on the error detection value.

Another aspect disclosed is a non-transitory computer readable medium comprising instructions that when executed cause a processor to perform a method of receiving a wireless communication frame comprising a physical header and a media access control header, the physical header including a service field having a contents, where the contents define an error detection value, and determining an absence of errors in the wireless communication frame based at least in part on the error detection value.

Another aspect disclosed is a method of communicating in a wireless network. The method includes generating a wireless communication frame comprising a physical header and a media access control header, the physical header including a service field having a contents, where the contents define one or more media access control parameters, and transmitting the wireless communication frame.

Another aspect disclosed is an apparatus for communicating in a wireless network. The apparatus includes a processor configured to generate a wireless communication frame comprising a physical header and a media access control header, the physical header including a service field having a contents, where the contents define one or more media access control parameters, and a transmitter configured to transmit the wireless communication frame.

Another aspect disclosed is an apparatus for communicating in a wireless network. The apparatus includes means for generating a wireless communication frame comprising a physical header and a media access control header, the physical header including a service field having a contents, where the contents define one or more media access control parameters, and a means for transmitting the wireless communication frame.

Another aspect disclosed is a non-transitory computer readable media comprising instructions that when executed cause a processor to perform a method of generating a wireless communication frame comprising a physical header and a media access control header, the physical header including a service field having a contents, where the contents define one or more media access control parameters, and transmitting the wireless communication frame.

Another aspect disclosed is a method of communicating in a wireless network, the method includes receiving a wireless communication frame comprising a physical header and a media access control header, the physical header including a service field having contents, where the contents define one or more media access control parameters, and decoding the one or more media access control parameters based on the service field.

Another aspect disclosed is an apparatus for communicating in a wireless network. The apparatus includes a receiver configured to receive a wireless communication frame comprising a physical header and a media access control header, the physical header including a service field having contents, wherein the contents define one or more media access control parameters; and a processor configured to decode the one or more media access control parameters based on the service field.

Another aspect disclosed is an apparatus for communicating in a wireless network. The apparatus includes a means for receiving a wireless communication frame comprising a physical header and a media access control header, the physical header including a service field having contents, where the contents define one or more media access control parameters, and a means for decoding the one or more media access control parameters based on the service field.

Another aspect disclosed is a non-transitory computer readable medium, comprising instructions that when executed cause a processor to perform a method of, receiving a wireless communication frame comprising a physical header and a media access control header, the physical header including a service field having contents, where the contents define one or more media access control parameters; and decoding the one or more media access control parameters based on the service field.

Another aspect disclosed is a method of communicating in a wireless network. The method includes generating a wireless communication frame comprising a physical header and a media access control header, the physical header including a scrambler seed field based, at least in part, on a type of the media access control header, and transmitting wireless communication frame.

Another aspect disclosed is an apparatus for communicating in a wireless network. The apparatus includes a means for generating a wireless communication frame comprising a physical header and a media access control header, the physical header including a scrambler seed field based, at least in part, on a type of the media access control header, and a means for transmitting the wireless communication frame.

Another aspect disclosed is a non-transitory computer readable medium comprising instructions that when executed cause a processor to perform the method of generating a wireless communication frame comprising a physical header and a media access control header, the physical header including a scrambler seed field based, at least in part, on a type of the media access control header, and transmitting the wireless communication frame

Another aspect disclosed is a method of communicating in a wireless network. The method includes receiving a wireless communication frame comprising a physical header and a media access control header, the physical header including a scrambler seed field based, at least in part, on a type of the media access control header, and decoding the media access control header based, at least in part, on the scrambler seed field.

Another aspect disclosed is an apparatus for communicating in a wireless network. The apparatus includes a receiver configured to receive a wireless communication frame comprising a physical header and a media access control header, the physical header including a scrambler seed field based, at least in part, on a type of the media access control header and a processor configured to decode the media access control header based, at least in part, on the scrambler seed field.

Another aspect disclosed is an apparatus for communicating in a wireless network. The apparatus includes a means for receiving a wireless communication frame comprising a physical header and a media access control header, the physical header including a scrambler seed field based, at least in part, on a type of the media access control header, and a means for decoding the media access control header based, at least in part, on the scrambler seed field.

Another aspect disclosed is a non-transitory computer readable medium comprising instructions that when executed cause a processor to perform the method of receiving a wireless communication frame comprising a physical header and a media access control header, the physical header including a scrambler seed field based, at least in part, on a type of the media access control header; and decoding the media access control header based, at least in part, on the scrambler seed field.

Another aspect disclosed is a method of communicating in a wireless network. The method includes generating a wireless communication frame comprising a physical header and a media access control header, the physical header including a service field having a contents, wherein the contents define a scrambler initialization value, and wherein the service field is one byte in length, and transmitting wireless communication frame.

Another aspect disclosed is an apparatus for communicating in a wireless network. The apparatus includes a means for generating a wireless communication frame comprising a physical header and a media access control header, the physical header including a service field having a contents, wherein the contents define a scrambler initialization value, and wherein the service field is one byte in length, and a means for transmitting the wireless communication frame.

Another aspect disclosed is a non-transitory computer readable medium comprising instructions that when executed cause a processor to perform the method of generating a wireless communication frame comprising a physical header and a media access control header, the physical header including a service field having a contents, wherein the contents define a scrambler initialization value, and wherein the service field is one byte in length, and transmitting the wireless communication frame.

Another aspect disclosed is a method of communicating in a wireless network. The method includes generating a scrambler initialization value, generating a physical header including a service field, the service field having a contents, limiting the service field to one byte in length, setting at least a portion of the contents of the service field to the scrambler initialization value, generating a wireless communication frame comprising the physical header and a media access control header, and transmitting the wireless communication frame. In some aspects, the physical header comprises at least one 802.11ah PLCP header format. In some aspects, the scrambler initialization is seven bits long. In some aspects, the scrambler initialization value is generated based, at least in part, on a type of the media access control header. In some aspects, the method further includes generating a media access control header, wherein the size of the media access control header is based on the type.

Another aspect disclosed is an apparatus for communicating in a wireless network. The apparatus includes a processor configured to generate a scrambler initialization value, a processor configured to generate a physical header including a service field, the service field having a contents, a processor configured to generate limit the service field to one byte in length, a processor configured to set at least a portion of the contents of the service field to the scrambler initialization value, a processor configured to generate a wireless communication frame comprising the physical header and a media access control header, and a transmitter configured to transmit the wireless communication frame. In some aspects, the physical header comprises at least one 802.11 ah PLCP header format. In some aspects, the scrambler initialization is seven bits long. In some aspects, the processor is configured to generate the scrambler initialization value based, at least in part, on a type of the media access control header. In some aspects, the apparatus also includes a processor configured to generate a media access control header, wherein the size of the media access control header is based on the type.

Another aspect disclosed is an apparatus for communicating in a wireless network. The apparatus includes means for generating a scrambler initialization value, means for generating a physical header including a service field, the service field having a contents, means for limiting the service field to one byte in length, means for setting at least a portion of the contents of the service field to the scrambler initialization value, means for generating a wireless communication frame comprising the physical header and a media access control header, and means for transmitting the wireless communication frame. In some aspects, the physical header comprises at least one 802.11 ah PLCP header format. In some aspects, the scrambler initialization value is seven bits long. In some aspects, the means for generating the scrambler initialization value is configured to generate the value based, at least in part, on a type of the media access control header. In some aspects, the apparatus further includes means for generating a media access control header, wherein the means for generating the media access control header is configured to base the size of the media access control header on the type.

Another aspect disclosed is a computer readable storage medium comprising instructions that when executed cause one or more processors to perform a method of communicating in a wireless network. The method includes generating a scrambler initialization value, generating a physical header including a service field, the service field having a contents, limiting the service field to one byte in length, setting at least a portion of the contents of the service field to the scrambler initialization value, generating a wireless communication frame comprising the physical header and a media access control header, and transmitting the wireless communication frame. In some aspects, the physical header comprises at least one 802.11ah PLCP header format. In some aspects, the scrambler initialization value is seven bits long. In some aspects, the scrambler initialization value is generated based, at least in part, on a type of the media access control header. In some aspects, the method further includes generating a media access control header, wherein the size of the media access control header is based on the type.

Another aspect disclosed is a method of communicating in a wireless network. The method includes receiving a wireless communication frame comprising a physical header and a media access control header, the physical header including a one byte service field having a contents, wherein the contents define a scrambler initialization value, and decoding the media access control header based at least in part on the service field. In some aspects, the physical header comprises at least one 802.11ah PLCP header format. In some aspects, the method further includes decoding a seven bit scrambler initialization value based on the service field. In some aspects, the method further includes determining a type of the media access control header based on the scrambler initialization value. In some aspects, the method further includes determining a size of the media access control header based on the type.

Another aspect disclosed is an apparatus for communicating in a wireless network. The apparatus includes a receiver configured to receive a wireless communication frame comprising a physical header and a media access control header, the physical header including a one byte service field having a contents, wherein the contents define a scrambler initialization value, and a processor configured to decode the media access control header based at least in part on the service field. In some aspects, the physical header comprises at least one 802.11ah PLCP header format. In some aspects, the processor is configured to decode a seven bit scrambler initialization value based on the service field. In some aspects, the processor is further configured to determine a type of the media access control header based on the scrambler initialization value. In some aspects, the processor is further configured to determine a size of the media access control header based on the type.

Another aspect disclosed is an apparatus for communicating in a wireless network. The apparatus includes means for receiving a wireless communication frame comprising a physical header and a media access control header, the physical header including a one byte service field having a contents, wherein the contents define a scrambler initialization value, and means for decoding the media access control header based at least in part on the service field. In some aspects, the physical header comprises at least one 802.11ah PLCP header format. In some aspects, the means for decoding is configured to decode a seven bit scrambler initialization value based on the service field. In some aspects, the means for decoding is configured to determine a type of the media access control header based on the scrambler initialization value. In some aspects, the means for decoding is configured to determine a size of the media access control header based on the type.

Another aspect disclosed is a computer readable storage medium comprising instructions that when executed cause one or more processors to perform a method of communicating in a wireless network. The method includes receiving a wireless communication frame comprising a physical header and a media access control header, the physical header including a one byte service field having a contents, wherein the contents define a scrambler initialization value, and decoding the media access control header based at least in part on the service field. In some aspects, the physical header comprises at least one 802.11ah PLCP header format. In some aspects, the method further includes decoding a seven bit scrambler initialization value based on the service field. In some aspects, the method further includes determining a type of the media access control header based on the scrambler initialization value. In some aspects, the method further includes determining a size of the media access control header based on the type.

### BRIEF DESCRIPTION OF THE DRAWINGS

FIG. 1 illustrates an example of a wireless communication system in which aspects of the present disclosure may be employed.
FIG. 2 shows a functional block diagram of an exemplary wireless device that may be employed within the wireless communication system of FIG. 1.
FIG. 3 shows a functional block diagram of exemplary components that may be utilized in the wireless device of FIG. 2 to transmit wireless communications.
FIG. 4 shows a functional block diagram of exemplary components that may be utilized in the wireless device of FIG. 2 to receive wireless communications.
FIG. 5 shows an exemplary structure of a wireless communication frame.
FIG. 6 shows an exemplary structure of the service field included in wireless frame.
FIG. 7 shows an exemplary structure of a media access control (MAC) frame.
FIG. 8 shows an exemplary structure of a frame control field of the MAC header 702 shown in FIG. 7.
FIG. 9A-B show exemplary structures of a service field illustrated in FIGS. 5 and 6.
FIG. 10A is a flowchart of an exemplary method for communicating on a wireless network.
FIG. 10B is a functional block diagram of an exemplary device that may be employed within a wireless communication system.
FIG. 11A is a flowchart of an exemplary method for communicating on a wireless network.
FIG. 11B is a functional block diagram of an exemplary device that may be employed within a wireless communication system.
FIG. 12A shows one embodiment of a service field that provides for reducing the size of the MAC header.
FIG. 12B shows exemplary structure of a frame control field that relies on the service field to store a portion of the fields shown in the frame control field of FIG. 8.
FIG. 12C shows an exemplary structure of a wireless frame that may provide reduced overhead via utilization of a frame control field of reduced size.
FIG. 13A shows an exemplary structure of a high throughput (HT) control field of the MAC header shown in FIG. 7.
FIG. 13B shows one embodiment of a service field that provides for reducing the size of the MAC header.
FIG. 13C shows an HT control field after fields stored in service field of FIG. 13B are removed.
FIG. 13D shows an exemplary structure of a wireless frame that may provide reduced overhead via utilization of a HT control field of reduced size.
FIG. 14A shows an exemplary structure of a QOS control field of the MAC header shown in FIG. 7
FIG. 14B shows one embodiment of a service field that provides for reducing the size of the MAC header.
FIG. 14C shows a QOS control field modified based on utilization of the service field as illustrated in FIG. 14B.
FIG. 14D shows an exemplary structure of a wireless frame that may provide reduced overhead via utilization of a QOS control field of reduced size.
FIG. 15A shows an exemplary structure of a service field as discussed previously.
FIG. 15B shows an exemplary structure of a shorted service field.
FIG. 15C shows a wireless frame utilizing a reduced size service field.
FIG. 16A is a flowchart of an exemplary method for communicating on a wireless network.
FIG. 16B is a functional block diagram of an exemplary device that may be employed within a wireless communication system.
FIG. 16C is a flowchart of an exemplary method for communicating on a wireless network.
FIG. 16D is a functional block diagram of an exemplary device that may be employed within a wireless communication system.
FIG. 17A is a flowchart of an exemplary method for communicating on a wireless network.
FIG. 17B is a functional block diagram of an exemplary device that may be employed within a wireless communication system.
FIG. 17C is a flowchart of an exemplary method for communicating on a wireless network.
FIG. 17D is a functional block diagram of an exemplary device that may be employed within a wireless communication system.
FIG. 18A shows one embodiment of a service field that provides for an indication of a type of a media access control header included in a wireless frame.
FIG. 18B shows another embodiment of a service field that provides for an indication of the type of a media access control header included in a wireless frame.
FIG. 18C shows just one example of a compressed MAC header that may be indicated by a type field within a scrambler seed field.
FIG. 19A is a flowchart of an exemplary method for communicating on a wireless network.
FIG. 19B is a functional block diagram of an exemplary device that may be employed within a wireless communication system.
FIG. 20A is a flowchart of an exemplary method for communicating on a wireless network.
FIG. 20B is a functional block diagram of an exemplary device that may be employed within a wireless communication system.
FIG. 21A is a flowchart of an exemplary method for communicating on a wireless network.
FIG. 21B is a functional block diagram of an exemplary device that may be employed within a wireless communication system.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Wireless network technologies may include various types of wireless local area networks (WLANs). A WLAN may be used to interconnect nearby devices together, employing widely used networking protocols. The various aspects described herein may apply to any communication standard, such as WiFi or, more generally, any member of the IEEE 802.11 family of wireless protocols. For example, the various aspects described herein may be used as part of the IEEE 802.11ah protocol, which uses sub-1GHz bands.

In some aspects, wireless signals in a sub-gigahertz band may be transmitted according to the 802.11ah protocol using orthogonal frequency-division multiplexing (OFDM), direct-sequence spread spectrum (DSSS) communications, a combination of OFDM and DSSS communications, or other schemes. Implementations of the 802.11ah protocol may be used for sensors, metering, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

Certain of the devices described herein may further implement Multiple Input Multiple Output (MIMO) technology and be implemented as part of the 802.11ah standard. A MIMO system employs multiple (NT) transmit antennas and multiple (NR) receive antennas for data transmission. A MIMO channel formed by the NT transmit and NR receive antennas may be decomposed into NS independent channels, which are also referred to as spatial channels or streams, where *N_{S}* ≤ min{*N_{T}, N_{R}*}*.* Each of the NS independent channels corresponds to a dimension. The MIMO system can provide improved performance (e.g., higher throughput and/or greater reliability) if the additional dimensionalities created by the multiple transmit and receive antennas are utilized.

In some implementations, a WLAN includes various devices which are the components that access the wireless network. For example, there may be two types of devices: access points ("APs") and clients (also referred to as stations, or "STAs"). In general, an AP serves as a hub or base station for the WLAN and an STA serves as a user of the WLAN. For example, a STA may be a laptop computer, a personal digital assistant (PDA), a mobile phone, etc. In an example, an STA connects to an AP via a WiFi (e.g., IEEE 802.11 protocol such as 802.11ah) compliant wireless link to obtain general connectivity to the Internet or to other wide area networks. In some implementations an STA may also be used as an AP.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain of the devices described herein may implement the 802.11ah standard, for example. Such devices, whether used as an STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g., for use with hotspots), or to implement machine-to-machine communications.

The devices in a wireless network may transmit/receive information between each other. The information may comprise packets, which in some aspects may be referred to as data units. The packets may include overhead information (e.g., header information, packet properties, etc.) that helps in routing the packet through the network, identifying the data in the packet, processing the packet, etc., as well as data, for example user data, multimedia content, etc. as might be carried in a payload of the packet.

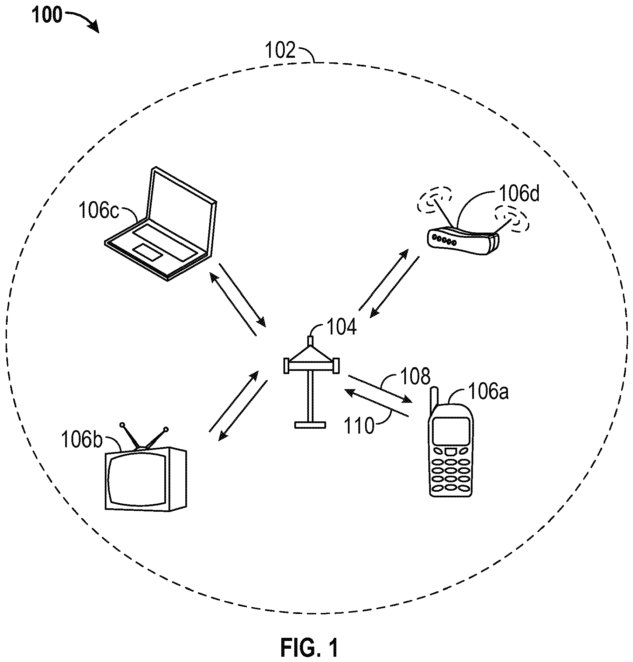

Accordingly, the header information is transmitted with packets. Such header information may comprise a large portion of a data packet. Accordingly, transmission of data in such packets may be inefficient due to the fact that much of the bandwidth for transmitting data may be used to transmit header information as opposed to the actual data. Thus, improved systems, methods, and devices for communicating packets are desired. FIG. 1 illustrates an example of a wireless communication system 100 in which aspects of the present disclosure may be employed. The wireless communication system 100 may operate pursuant to a wireless standard, for example the 802.11ah standard. The wireless communication system 100 may include an AP 104, which communicates with STAs 106a, 106b, 106c, and 106d (collectively STAs 106).

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer network between the STAs 106. Accordingly, the functions of the AP 104 described herein may alternatively be performed by one or more of the STAs 106.

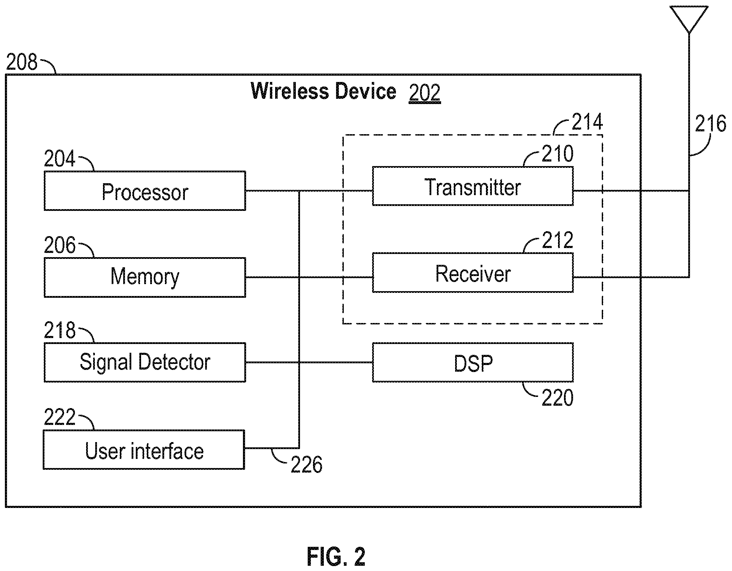

FIG. 2 illustrates various components that may be utilized in a wireless device 202 that may be employed within the wireless communication system 100. The wireless device 202 is an example of a device that may be configured to implement the various methods described herein. For example, the wireless device 202 may comprise the AP 104 or one of the STAs 106 of FIG. 1.

The wireless device 202 may include a processor 204 which controls operation of the wireless device 202. The processor 204 may also be referred to as a central processing unit (CPU). Memory 206, which may include both read-only memory (ROM) and random access memory (RAM), provides instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

When the wireless device 202 is implemented or used as a transmitting node, the processor 204 may be configured to select one of a plurality of media access control (MAC) header types, and to generate a packet having that MAC header type. For example, the processor 204 may be configured to generate a packet comprising a MAC header and a payload and to determine what type of MAC header to use, as discussed in further detail below.

When the wireless device 202 is implemented or used as a receiving node, the processor 204 may be configured to process packets of a plurality of different MAC header types. For example, the processor 204 may be configured to determine the type of MAC header used in a packet and process the packet and/or fields of the MAC header accordingly as further discussed below.

The processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a housing 208 that may include a transmitter 210 and a receiver 212 to allow transmission and reception of data between the wireless device 202 and a remote location. The transmitter 210 and receiver 212 may be combined into a transceiver 214. An antenna 216 may be attached to the housing 208 and electrically coupled to the transceiver 214. The wireless device 202 may also include (not shown) multiple transmitters, multiple receivers, multiple transceivers, and/or multiple antennas.

The transmitter 210 may be configured to wirelessly transmit packets having different MAC header types. For example, the transmitter 210 may be configured to transmit packets with different types of headers generated by the processor 204, discussed above.

The receiver 212 may be configured to wirelessly receive packets having different MAC header types. In some aspects, the receiver 212 is configured to detect a type of a MAC header used and process the packet accordingly, as discussed in further detail below.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals. The DSP 220 may be configured to generate a data unit for transmission. In some aspects, the data unit may comprise a physical layer data unit (PPDU). In some aspects, the PPDU is referred to as a packet.

The wireless device 202 may further comprise a user interface 222 in some aspects. The user interface 222 may comprise a keypad, a microphone, a speaker, and/or a display. The user interface 222 may include any element or component that conveys information to a user of the wireless device 202 and/or receives input from the user.

The various components of the wireless device 202 may be coupled together by a bus system 226. The bus system 226 may include a data bus, for example, as well as a power bus, a control signal bus, and a status signal bus in addition to the data bus. Those of skill in the art will appreciate the components of the wireless device 202 may be coupled together or accept or provide inputs to each other using some other mechanism.

Although a number of separate components are illustrated in FIG. 2, one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements. Furthermore, the processor 204 may be used to implement any of the components, modules, circuits, or the like described below, or each may be implemented using a plurality of separate elements.

For ease of reference, when the wireless device 202 is configured as a transmitting node, it is hereinafter referred to as a wireless device 202t. Similarly, when the wireless device 202 is configured as a receiving node, it is hereinafter referred to as a wireless device 202r. A device in the wireless communication system 100 may implement only functionality of a transmitting node, only functionality of a receiving node, or functionality of both a transmitting node and a receive node.

As discussed above, the wireless device 202 may comprise an AP 104 or a STA 106, and may be used to transmit and/or receive communications having a plurality of MAC header types.

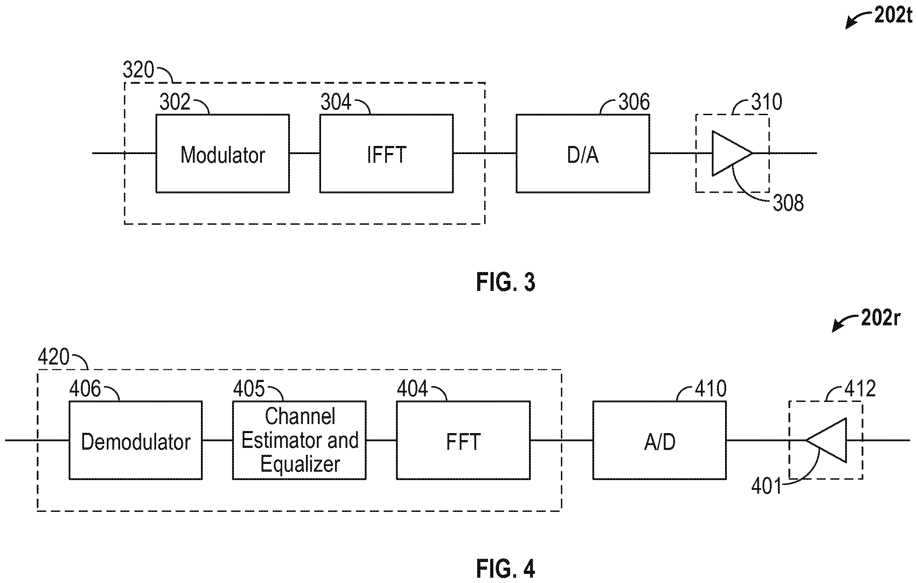

As discussed above, the wireless device 202 may comprise an AP 104 or an STA 106, and may be used to transmit and/or receive communications. FIG. 3 illustrates various components that may be utilized in the wireless device 202t to transmit wireless communications. The components illustrated in FIG. 3 may be used, for example, to transmit OFDM communications. In some aspects, the components illustrated in FIG. 3 are used to generate and transmit packets to be sent over a bandwidth of less than or equal to 1 MHz (AA: Currently 11ah can transmit over bandwidths of up to 16 MHz. Do we need to limit applicability to leq 1 MHz?).

The wireless device 202t of FIG. 3 may comprise a modulator 302 configured to modulate bits for transmission. For example, the modulator 302 may determine a plurality of symbols from bits received from the processor 204 (FIG. 2) or the user interface 222 (FIG. 2), for example by mapping bits to a plurality of symbols according to a constellation. The bits may correspond to user data or to control information. In some aspects, the bits are received in codewords. In one aspect, the modulator 302 comprises a QAM (quadrature amplitude modulation) modulator, for example a 16-QAM modulator or a 64-QAM modulator. In other aspects, the modulator 302 comprises a binary phase-shift keying (BPSK) modulator or a quadrature phase-shift keying (QPSK) modulator.

The wireless device 202t may further comprise a transform module 304 configured to convert symbols or otherwise modulated bits from the modulator 302 into a time domain. In FIG. 3, the transform module 304 is illustrated as being implemented by an inverse fast Fourier transform (IFFT) module. In some implementations, there may be multiple transform modules (not shown) that transform units of data of different sizes. In some implementations, the transform module 304 may be itself configured to transform units of data of different sizes. For example, the transform module 304 may be configured with a plurality of modes, and may use a different number of points to convert the symbols in each mode. For example, the IFFT may have a mode where 32 points are used to convert symbols being transmitted over 32 tones (i.e., subcarriers) into a time domain, and a mode where 64 points are used to convert symbols being transmitted over 64 tones into a time domain. The number of points used by the transform module 304 may be referred to as the size of the transform module 304.

In FIG. 3, the modulator 302 and the transform module 304 are illustrated as being implemented in the DSP 320. In some aspects, however, one or both of the modulator 302 and the transform module 304 are implemented in the processor 204 or in another element of the wireless device 202t (e.g., see description above with reference to FIG. 2).

As discussed above, the DSP 320 may be configured to generate a data unit for transmission. In some aspects, the modulator 302 and the transform module 304 may be configured to generate a data unit comprising a plurality of fields including control information and a plurality of data symbols.

Returning to the description of FIG. 3, the wireless device 2025 may further comprise a digital to analog converter 306 configured to convert the output of the transform module into an analog signal. For example, the time-domain output of the transform module 306 may be converted to a baseband OFDM signal by the digital to analog converter 306. The digital to analog converter 306 may be implemented in the processor 204 or in another element of the wireless device 202 of FIG. 2. In some aspects, the digital to analog converter 306 is implemented in the transceiver 214 (FIG. 2) or in a data transmit processor.

The analog signal may be wirelessly transmitted by the transmitter 310. The analog signal may be further processed before being transmitted by the transmitter 310, for example by being filtered or by being upconverted to an intermediate or carrier frequency. In the aspect illustrated in FIG. 3, the transmitter 310 includes a transmit amplifier 308. Prior to being transmitted, the analog signal may be amplified by the transmit amplifier 308. In some aspects, the amplifier 308 comprises a low noise amplifier (LNA).

The transmitter 310 is configured to transmit one or more packets or data units in a wireless signal based on the analog signal. The data units may be generated using the processor 204 (FIG. 2) and/or the DSP 320, for example using the modulator 302 and the transform module 304 as discussed above. Data units that may be generated and transmitted as discussed above are described in additional detail below.

FIG. 4 illustrates various components that may be utilized in the wireless device 202 of FIG. 2 to receive wireless communications. The components illustrated in FIG. 4 may be used, for example, to receive OFDM communications. In some aspects, the components illustrated in FIG. 4 are used to receive data units over a bandwidth of equal to or less than 1 MHz. For example, the components illustrated in FIG. 4 may be used to receive data units transmitted by the components discussed above with respect to FIG. 3.

The receiver 412 of wireless device 202b is configured to receive one or more packets or data units in a wireless signal. Data units that may be received and decoded or otherwise processed as discussed below.

In the aspect illustrated in FIG. 4, the receiver 412 includes a receive amplifier 401. The receive amplifier 401 may be configured to amplify the wireless signal received by the receiver 412. In some aspects, the receiver 412 is configured to adjust the gain of the receive amplifier 401 using an automatic gain control (AGC) procedure. In some aspects, the automatic gain control uses information in one or more received training fields, such as a received short training field (STF) for example, to adjust the gain. Those having ordinary skill in the art will understand methods for performing AGC. In some aspects, the amplifier 401 comprises an LNA.

The wireless device 202r may comprise an analog to digital converter 410 configured to convert the amplified wireless signal from the receiver 412 into a digital representation thereof. Further to being amplified, the wireless signal may be processed before being converted by the digital to analog converter 410, for example by being filtered or by being downconverted to an intermediate or baseband frequency. The analog to digital converter 410 may be implemented in the processor 204 (FIG. 2) or in another element of the wireless device 202r. In some aspects, the analog to digital converter 410 is implemented in the transceiver 214 (FIG. 2) or in a data receive processor.

The wireless device 202r may further comprise a transform module 404 configured to convert the representation of the wireless signal into a frequency spectrum. In FIG. 4, the transform module 404 is illustrated as being implemented by a fast Fourier transform (FFT) module. In some aspects, the transform module may identify a symbol for each point that it uses. As described above with reference to FIG. 3, the transform module 404 may be configured with a plurality of modes, and may use a different number of points to convert the signal in each mode. For example, the transform module 404 may have a mode where 32 points are used to convert a signal received over 32 tones into a frequency spectrum, and a mode where 64 points are used to convert a signal received over 64 tones into a frequency spectrum. The number of points used by the transform module 404 may be referred to as the size of the transform module 404. In some aspects, the transform module 404 may identify a symbol for each point that it uses.

The wireless device 202b may further comprise a channel estimator and equalizer 405 configured to form an estimate of the channel over which the data unit is received, and to remove certain effects of the channel based on the channel estimate. For example, the channel estimator 405 may be configured to approximate a function of the channel, and the channel equalizer may be configured to apply an inverse of that function to the data in the frequency spectrum.

The wireless device 202t may further comprise a demodulator 406 configured to demodulate the equalized data. For example, the demodulator 406 may determine a plurality of bits from symbols output by the transform module 404 and the channel estimator and equalizer 405, for example by reversing a mapping of bits to a symbol in a constellation. The bits may be processed or evaluated by the processor 204 (FIG. 2), or used to display or otherwise output information to the user interface 222 (FIG. 2). In this way, data and/or information may be decoded. In some aspects, the bits correspond to codewords. In one aspect, the demodulator 406 comprises a QAM (quadrature amplitude modulation) demodulator, for example a 16-QAM demodulator or a 64-QAM demodulator. In other aspects, the demodulator 406 comprises a binary phase-shift keying (BPSK) demodulator or a quadrature phase-shift keying (QPSK) demodulator.

In FIG. 4, the transform module 404, the channel estimator and equalizer 405, and the demodulator 406 are illustrated as being implemented in the DSP 420. In some aspects, however, one or more of the transform module 404, the channel estimator and equalizer 405, and the demodulator 406 are implemented in the processor 204 (FIG. 2) or in another element of the wireless device 202 (FIG. 2).

As discussed above, the wireless signal received at the receiver 212 comprises one or more data units. Using the functions or components described above, the data units or data symbols therein may be decoded evaluated or otherwise evaluated or processed. For example, the processor 204 (FIG. 2) and/or the DSP 420 may be used to decode data symbols in the data units using the transform module 404, the channel estimator and equalizer 405, and the demodulator 406.

Data units exchanged by the AP 104 and the STA 106 may include control information or data, as discussed above. At the physical (PHY) layer, these data units may be referred to as physical layer protocol data units (PPDUs). In some aspects, a PPDU may be referred to as a packet or physical layer packet. Each PPDU may comprise a preamble and a payload. The preamble may include training fields and a SIG field. The payload may comprise a Media Access Control (MAC) header or data for other layers, and/or user data, for example. The payload may be transmitted using one or more data symbols. The systems, methods, and devices herein may utilize data units with training fields whose peak-to-power ratio has been minimized.

The wireless device 202a shown in FIG. 3 shows an example of a single transmit chain to be transmitted over an antenna. The wireless device 202b shown in FIG. 4 shows an example of a single receive chain to be received over an antenna. In some implementations, the wireless device 202a or 202b may implement a portion of a MIMO system using multiple antennas to simultaneously transmit data.

Certain implementations described herein may be directed to wireless communication systems that may be used for smart metering or be used in a smart grid network. These wireless communication systems may be used to provide sensor applications or be used in home automation. Wireless devices used in such systems may instead or in addition be used in a healthcare context, for example, for personal healthcare. They may also be used for surveillance, to enable extended-range Internet connectivity (e.g., for use with hotspots), or to implement machine-to-machine communications. Accordingly, some implementations may use low data rates such as approximately 150 Kbps. Implementations may further have increased link budget gains (e.g., around 20 dB) over other wireless communications such as 802.11b. In accordance with low data rates, if wireless nodes are configured for use in a home environment, certain aspects may be directed to implementations with good in-home coverage without power amplification. Furthermore, certain aspects may be directed to single-hop networking without using a MESH protocol. In addition, certain implementations may result in significant outdoor coverage improvement with power amplification over other wireless protocols. Furthermore, certain aspects may be directed to implementations that may accommodate large outdoor delay-spread and reduced sensitivity to Doppler. Certain implementations may achieve similar LO accuracy as traditional WiFi.

Accordingly, certain implementations are directed to sending wireless signals with low bandwidths in sub-gigahertz bands. For example, in one exemplary implementation, a symbol may be configured to be transmitted or received using a bandwidth of 1 MHz. The wireless device 202 of FIG. 2 may be configured to operate in one of several modes. In one mode, symbols such as OFDM symbols may be transmitted or received using a bandwidth of 1 MHz. In another mode, symbols may be transmitted or received using a bandwidth of 2 MHz. Additional modes may also be provided for transmitting or receiving symbols using a bandwidth of 4 MHz, 8 MHz, 16 MHz, and the like. The bandwidth may also be referred to as the channel width.

Each mode may use a different number of tones/subcarriers for transmitting the information. For example, in one implementation, a 1 MHz mode (corresponding to transmitting or receiving symbols using a bandwidth of 1 MHz) may use 32 tones. In one aspect, using a 1 MHz mode may provide for a 13 dB noise reduction as compared to a bandwidth such as 20 MHz. In addition, low rate techniques may be used to overcome effects such as frequency diversity losses due to a lower bandwidth which could result in 4-5 dB losses depending on channel conditions. To generate/evaluate symbols sent or received using 32 tones, a transform module 304 or 404 as described above with reference to FIGs. 3 and 4 above may be configured to use a 32 point mode (e.g., a 32 point IFFT or FFT). The 32 tones may be allocated as data tones, pilot tones, guard tones, and a DC tone. In one implementation, 24 tones may be allocated as data tones, 2 tones may be allocated as pilot tones, five tones may be allocated as guard tones, and 1 tone may be reserved for the DC tone. In this implementation, the symbol duration may be configured to be 40 µs including cyclic prefix. Other tone allocations are also possible.

For example, a wireless device 202a (FIG. 3) may be configured to generate a packet for transmission via a wireless signal using a bandwidth of 1 MHz. In one aspect, the bandwidth may be approximately 1 MHz where approximately 1 MHz may be within a range of 0.8 MHz to 1.2 MHz. The packet may be formed of one or more OFDM symbols having 32 tones allocated as described using a DSP 320 (FIG. 3) or other processor as described above. A transform module 304 (FIG. 3) in a transmit chain may be configured as an IFFT module operating according to a thirty-two point mode to convert the packet into a time domain signal. A transmitter 310 (FIG. 3) may then be configured to transmit the packet.

Likewise, a wireless device 202b (FIG. 4) may be configured to receive the packet over a bandwidth of 1 MHz. In one aspect, the bandwidth may be approximately 1 MHz where approximately 1 MHz may be within a range of 0.8 MHz to 1.2 MHz. The wireless device 202b may include a DSP 420 including a transform module 404 (FIG. 4) in a receive chain that may be configured as an FFT module operating according to a thirty-two point mode to transform the time domain signal into a frequency spectrum. A DSP 420 may be configured to evaluate the packet. The 1 MHz mode may support a modulation and coding scheme (MCS) for both a low data rate and a "normal" rate. According to some implementations, the preamble 702 may be designed for a low rate mode that offers reliable detection and improved channel estimation as will be further described below. Each mode may be configured to use a corresponding preamble configured to optimize transmissions for the mode and desired characteristics.

In addition to a 1 MHz mode, a 2 MHz mode may additionally be available that may be used to transmit and receive symbols using 64 tones. In one implementation, the 64 tones may be allocated as 52 data tones, 4 pilot tones, 1 DC tone, and 7 guard tones. As such, a transform module 304 or 404 of FIGs. 3 and 4 may be configured to operate according to a 64 point mode when transmitting or receiving 2 MHz symbols. The symbol duration may also be 40 µs including cyclic prefix. Additional modes with different bandwidths (e.g., 4 MHz, 8 MHz, and 16 MHz) may be provided that may use transform modules 304 or 404 operating in modes of corresponding different sizes (e.g., 128 point FFT, 256 point FFT, 512 point FFT, etc.). In addition, each of the modes described above may be configured additionally according to both a single user mode and a multi user mode. Wireless signals using bandwidths less than or equal to 2 MHz may provide various advantages for providing wireless nodes that are configured to meet global regulatory constraints over a broad range of bandwidth, power, and channel limitations.

As described above, the wireless device 202 may comprise an AP 104 or a STA 106, and may be used to transmit and/or receive media access control (MAC) frames of different types.

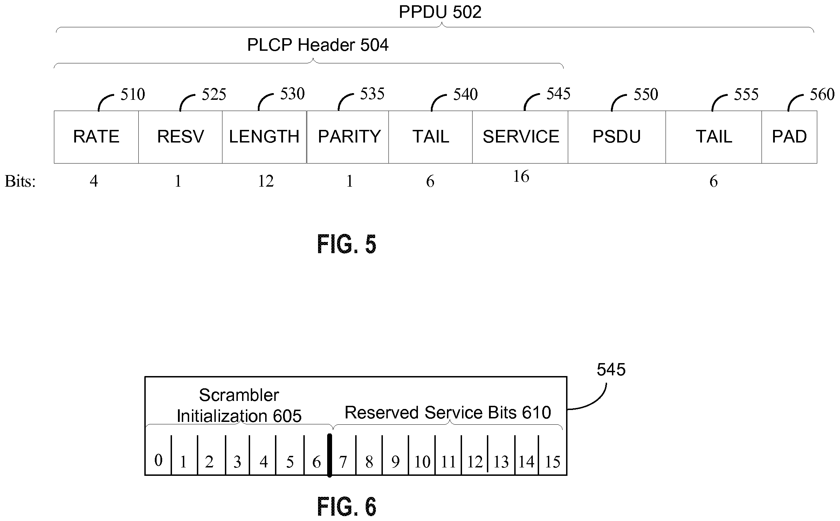

FIG. 5 shows an exemplary structure of a wireless communication frame. The illustrated frame format conforms to the 802.11 PLCP Protocol Data Unit (PPDU) frame format. Frame 502 includes a physical layer convergence protocol (PLCP) header 504. The PLCP header includes a rate field 510, reserved field 525, length field 530, parity field 535, tail field 540, service field 545, PLCP Service Data Unit (PSDU) Field 550, a tail field 555, and a pad field 560. The fields 510-560 make up the PLCP Protocol Data Unit 502. FIG. 5 further indicates the size in bits of each of the fields 510-560. The PSDU field 550 and pad field 560 include a variable number of bits.

FIG. 6 shows an exemplary structure of the service field 545 included in wireless frame 502. The service field includes sixteen (16) bits. In an embodiment, bit 0 is transmitted first in time. Bits 0-6 are included in a scrambler initialization or seed field 605. Bits 7-15 are included in a reserved service bits field 610. Some wireless protocol standards specify that reserved service bits 610 are reserved for future use and shall be set to zero. The reserved service bits 610 include nine (9) bits that are unused in some implementations. Because these nine bits are transmitted with a wireless frame including service field 545, they consume a portion of a wireless medium's transmission capacity. That capacity may be more efficiently utilized by communicating information in one or more of the nine (9) bits of the service field. Additionally, the scrambler initialization or seed bits 605 may also provide opportunities to more efficiently use a transmission medium's capacity.

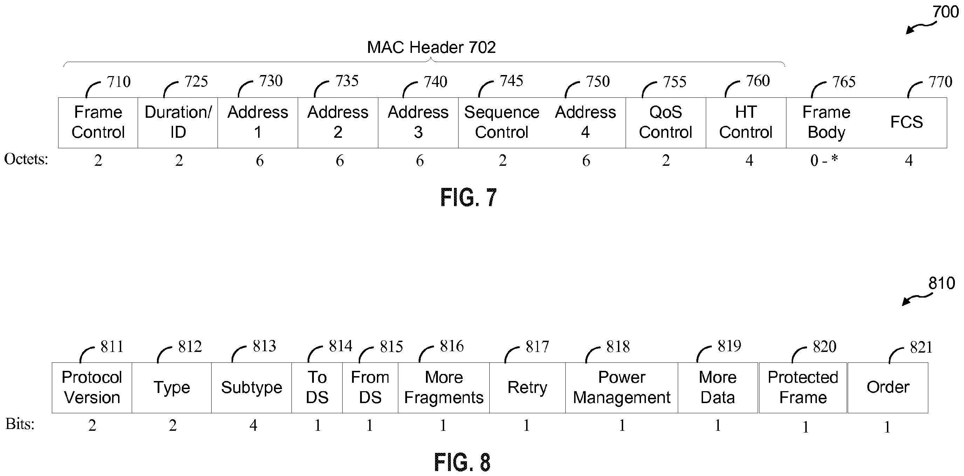

FIG. 7 shows an exemplary structure of a media access control (MAC) frame 700. As shown, the MAC frame 700 includes 11 different fields: a frame control (fc) field 710, a duration/identification (dur) field 725, a receiver address (a1) field 730, a transmitter address (a2) field 735, a destination address (a3) field 740, a sequence control (sc) field 745, a fourth address (a4) field 750, a quality of service (QoS) control (qc) field 755, a High Throughput (HT) control field 760, the frame body 765, and a frame check sequence (FCS) field 770. The fields 710-760 make up the MAC header 702.

Each of the fields of a media access control frame may be considered a media access control parameter. Additionally, each field may be comprised of one or more sub-fields or fields. For example, frame control field 710 of media access control header 702 may be comprised of multiple subfields, such as a protocol version, type field, subtype field, and other fields discussed below with respect to FIG. 8. Each of these subfields or fields may also be considered a media access control parameter. In some embodiments, individual bits of a media access control frame may be considered a media access control parameter.

Each of the a1, a2, a3, and a4 fields 730, 735, 740, and 750 comprises a full MAC address of a device, which is a 48-bit (6 octet) value. FIG. 7 further indicates the size in octets of each of the fields 710-770. The frame body field 765 comprises a variable number of octets (e.g., from 0 to 7951) Summing the value of all of the field sizes gives the overall size of the MAC header 702, which is 38 octets. The total size of a given packet may be on the order of 200 octets. Therefore, the MAC header 702 comprises a large portion of the overall packet size, meaning the overhead for transmitting a data packet is large.

MAC frames of different types may include only a portion of the fields shown in FIG. 7. For example, if a MAC frame is a control frame, the MAC frame may not include the QoS control field 760 or the HT control field 760. In addition, depending on the type, the MAC frame 700 may include additional fields. However, in some cases, regardless of the type, the MAC frame 700 may include the frame control field 710.

FIG. 8 shows an exemplary structure of a frame control field 810 of the MAC header 702 shown in FIG. 7. As shown, the frame control field includes a protocol version field 811, a type field 812, a subtype field 813, a To DS field 814, a from DS field 815, a more fragments field 616, a retry field 817, a power management field 818, a more data field 819, a protected frame field 820, and an order field 821. The type of the MAC frame 700 may be defined by the combination of type and subtype fields 812 and 813. For example, for a management frame, the type field 812 may have a binary value of 00. The subtype field 813 may then indicate the type of management field with a four bit value providing 16 different management field types. As another example, the type of MAC frame 700 may be a control frame indicated by a type field 812 with a binary value of 01. The subtype field 813 may further indicate different types of control fields such as block ack request frames, block ack frames, ps-poll frames, request to send (RTS) fields, clear to send (CTS) fields, and the like.

In some cases it may be advantageous to define new types and formats of MAC frames for different uses/purposes. For example, it may be beneficial to alter MAC frame formats/types for a device that is configured to transmit using sub-gigahertz bands using low bandwidths such as 1 MHz and 2 MHz as described above while also configured to transmit in other bands. For example, it may be advantageous to compress field formats and remove redundant information when transmitting with low power using low bandwidths. To preserve the ability to communicate with legacy devices, a wireless device 202 may need to recognize previously defined formats. As such, it is desirable to be able to identify additional different types of MAC frames while preserving the existing MAC frame format and still being able to use the defined existing frame types. For example, it may be desirable to design new or enhanced control, management, or data frames.

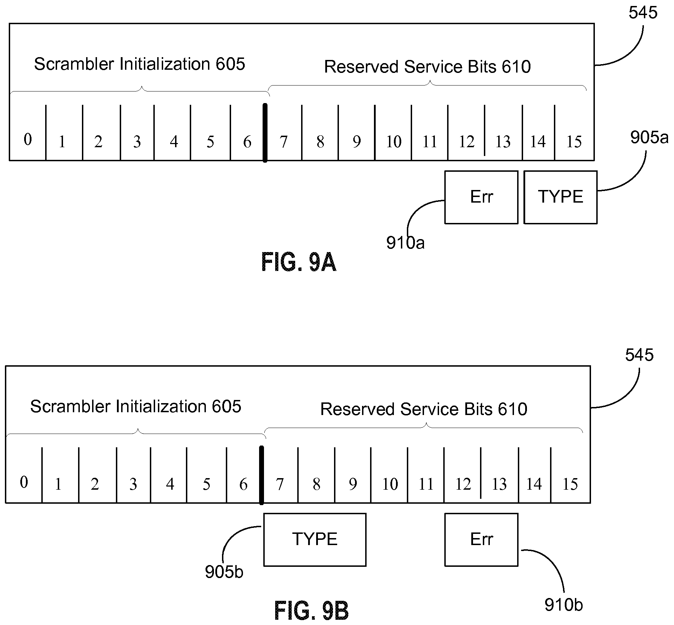

FIG. 9A-B show exemplary structures of a service field 545 illustrated in FIGs. 5 and 6. To provide for identification of additional different types of MAC frames, the service field 545 described above may be repurposed to identify one or more frame types. For example, the contents of the service field in the PLCP header of a wireless frame may include a MAC frame type indication 905a. The MAC frame type indication may indicate the type of MAC frame included in the wireless frame. In the illustrated embodiment of FIG. 9A, the MAC frame type indication includes two bits (bits 14 and 15) of the service field 545. With a two bit frame type indication, up to four different MAC frame types may be distinguished. In another embodiment, the frame type indication may be comprised of any number of bits and utilize different bits within the service field 545. For example, in the embodiment of FIG. 9B, bits 7, 8, and 9 define a frame type indication 905b. With this embodiment, up to eight different MAC frame types may be distinguished based on the frame type indication. In an embodiment, the length of the MAC frame in the wireless frame may be based on the frame type. By examining the contents of the frame type value 905a or 905b, a receiver of the wireless frame may determine how to decode fields in a media access control header included in the wireless frame.

Because error correction may not be performed on a standard PLCP header of a wireless frame, it may be desirable to enhance the PLCP header to provide fields to support correction of errors in the frame type indication. These errors may occur during transmission of the wireless frame including the PLCP header. To provide for an error correction capability, contents of the service type field 545 may define an error detection value. In an embodiment, the error detection value may be based on the frame type indication. In another embodiment, the error detection value may be based on a portion of or all of the contents of a media access control header. In an embodiment the error detection value may be based on the scrambler initialization or seed field 605.

FIG. 9A illustrates a two bit error detection value 910a. In an embodiment, error detection value 910a may define parity bits based on the frame type indication 905a. For example, bit 12 of service field 545 may be a parity bit corresponding to bit 14 of the service type field 545. Similarly, bit 13 may be a parity bit corresponding to bit 15 of the service type field 545. In an embodiment, error detection value 910a may not be based on parity. For example, the error detection value 910a may define a cyclic redundancy check value that is based on the value of the frame type indication 905a.

Similarly, FIG. 9B illustrates an error detection value 910b that utilizes bits 12 and 13 of the service type field. Error detection value 910b is based on frame type indication 905b. For example, error detection value 910b may represent a cyclic redundancy check value of frame type indication 905b. In other embodiments, the error detection value for the frame type indication may utilize any portion of the contents of the service type field 545. The portion may be contiguous or non-contiguous.

In an embodiment, up to one byte of the service field 545 may be interpreted as an extension to a media access control header. For example, one bit of the service field 545 may define whether a media access control header of a reduced length is included in a wireless frame. Eight bits of the service field 545 may define an extension to the reduced length header when the reduced media access control header is present.

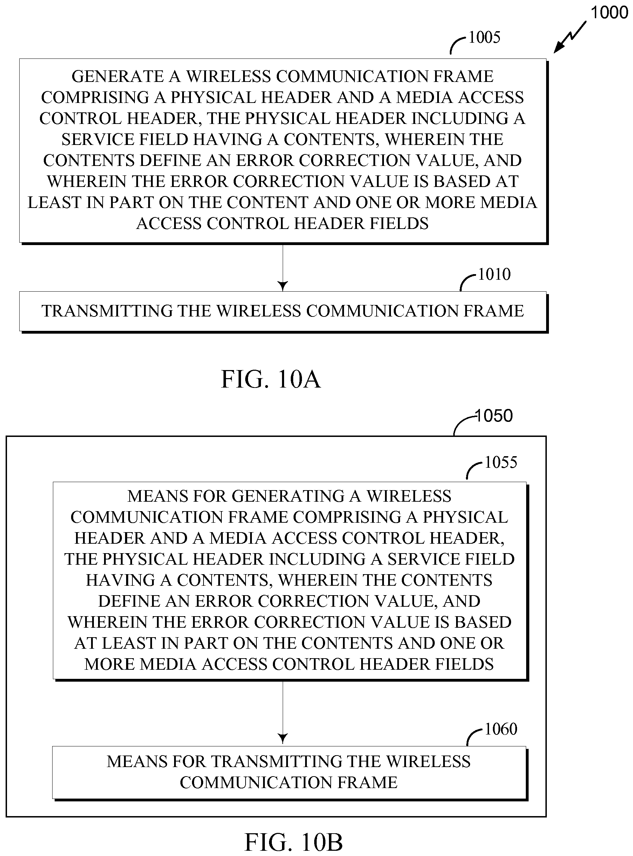

FIG. 10A is a flowchart of an exemplary method 1000 for communicating on a wireless network. The frames (within packets) may be generated at either the AP 104 or the STA 106 and transmitted to another node in the wireless network 100. Although the method 1000 is described below with respect to elements of the wireless device 202, those having ordinary skill in the art will appreciate that other components may be used to implement one or more of the steps described herein.

At block 1005, a media access control frame is generated that includes a physical header and a media access control header. The physical header includes a service field having a contents. The contents define an error detection value. In an embodiment, the error detection value may be based on the contents. In some aspects, the error detection value may also be based on one or more media access control header fields.

For example, a portion of the service field contents may indicate a type of the media access control header. The type of the media access control header may indicate the length of the media access control header. The type may also indicate the structure of the media access control header, for example, the number of fields included in the media access control header, and at least their lengths and positions within the header. In an embodiment, the error detection value may be based on a portion or all of the media access control header. For example, in some aspects, the error detection value may include a CRC value of the media access control header. In some other aspects, the error detection value may include a CRC value of a portion of the media access control header. The generation may be performed by the processor 204 and/or the DSP 220. At block 1010, the media access control frame is transmitted. The transmitter 210 may transmit the media access control frame within a packet. Further, operation of the transmitter 210 may in some aspects be controlled at least in part by the processor 204.

FIG. 10B is a functional block diagram of an exemplary device 1050 that may be employed within the wireless communication system 100. The device 1050 includes means 1055 for generating a wireless communication frame comprising a physical header and a media access control header, wherein the physical header includes a service field having a contents, and the contents define an error detection value, and wherein the error detection value is based at least in part on the contents and one or more media access control header fields. In an embodiment, means 1055 may be configured to perform one or more of the functions discussed above with respect to block 1005. In an embodiment, the means 1055 for generating a wireless communication frame comprising a physical header and a media access control header may include a processor, such as processor 204 of FIG. 2. Means 1055 may also include one or more of a processor, signal generator, transceiver, decoder, or a combination of hardware and/or software component(s), circuits, and/or module(s). The device 1050 further includes means 1060 for transmitting the wireless communication frame. In an embodiment, means 1060 may be configured to perform one or more of the functions discussed above with respect to block 1010. The means 1060 for transmitting the wireless frame may comprise a transmitter, such as transmitter 210 of FIG. 2. Means 1060 may also include one or more of a processor, signal generator, transceiver, decoder, or a combination of hardware and/or software component(s), circuits, and/or module(s).

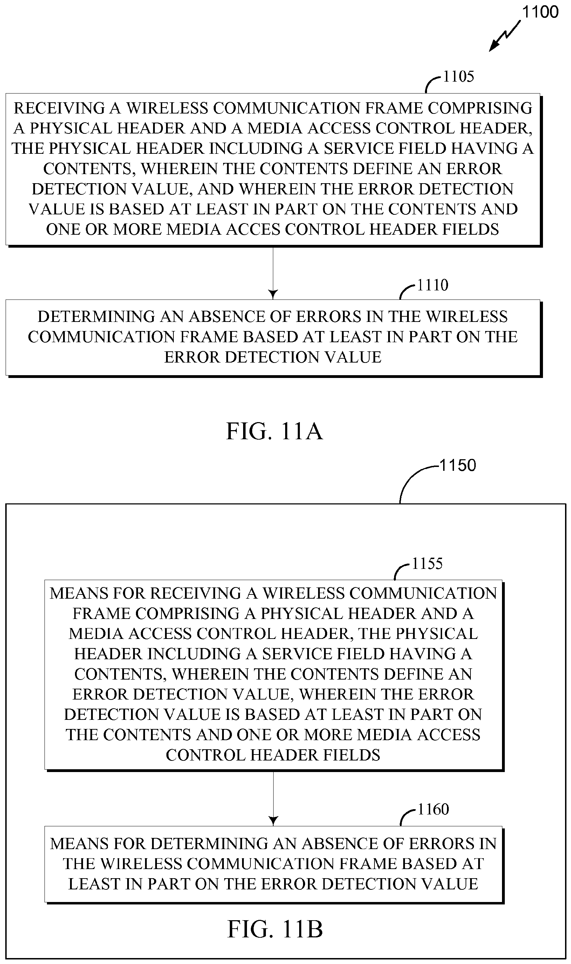

FIG. 11A is a flowchart of an exemplary method 1100 for communicating on a wireless network. The method 1100 may be used to receive at least any of the frames (within packets) described above. The frames may be received at either the AP 104 or the STA 106 from another node in the wireless network 100. Although the method 1100 is described below with respect to elements of the wireless device 202, those having ordinary skill in the art will appreciate that other components may be used to implement one or more of the steps described herein.

At block 1105, a media access control frame is received. The media access control frame includes a physical header and a media access control header. The physical header includes a service field having a contents. The contents of the service field define an error detection value. The error detection value is based at least in part on the contents and one or more media access control header fields.

The reception may be performed by the receiver 212, for example. Further, operation of the receiver 212 may in some aspects be controlled at least in part by the processor 204. At block 1110, an absence of errors in the wireless communication frame is determined based at least in part on the error detection value. The determination may be performed by the processor 204, the signal detector 218, and/or the DSP 220.

FIG. 11B is a functional block diagram of an exemplary device 1150 that may be employed within the wireless communication system 100. The device 1150 includes means 1155 for receiving a wireless communication frame comprising a physical header and a media access control header, wherein the physical header includes a service field having a contents, and the contents define an error detection value, and wherein the error detection value is based at least in part on the contents and one or more media access control header fields. In an embodiment, means 1155 may be configured to perform one or more of the functions discussed above with respect to block 1105. In an embodiment, the means for receiving a wireless communication frame comprising a physical header and a media access control header, the physical header including a service field having a contents, wherein the contents define an error detection value may be a receiver, such as receiver 212 of FIG. 2. Means 1155 may also include one or more of a processor, signal generator, transceiver, decoder, or a combination of hardware and/or software component(s), circuits, and/or module(s). The device 1150 further includes means 1160 for determining an absence of errors in the wireless communication frame based at least in part on the error detection value. In an embodiment, means 1160 may be configured to perform one or more of the functions discussed above with respect to block 1110. The means 1160 for determining an absence of errors may comprises a processor, such as processor 204 of FIG. 2. Means 1160 may also include one or more of a processor, signal generator, transceiver, decoder, or a combination of hardware and/or software component(s), circuits, and/or module(s).

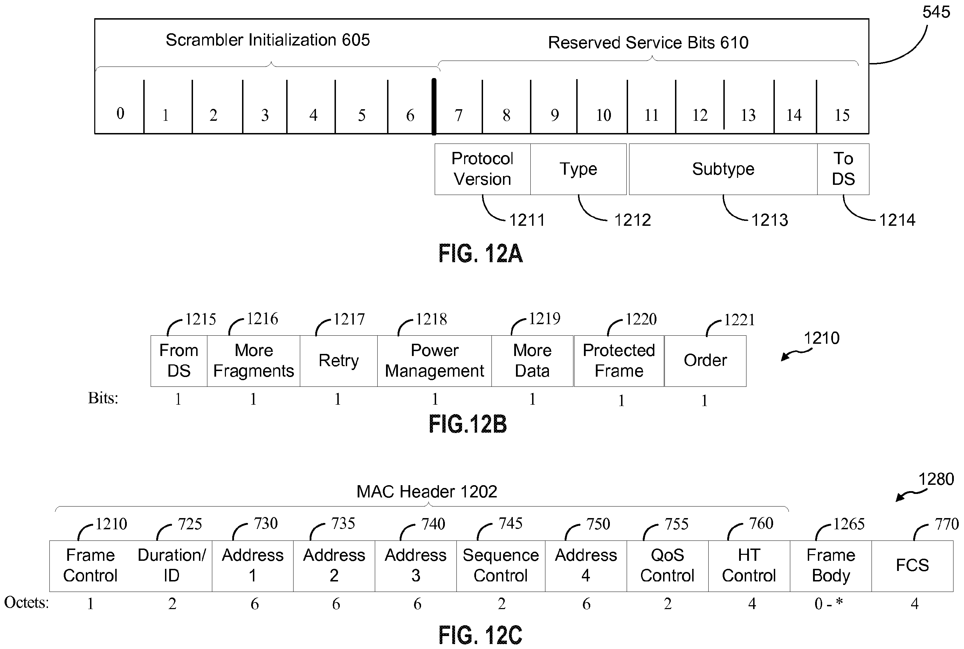

FIGs. 12A-B show exemplary structures of a service field 545 illustrated in FIGS. 5 and 6. As discussed above, one embodiment of a MAC header 702 is 38 octets. Because the packet size of a wireless frame may be up to approximately 200 octets, the 38 octets of the MAC header 702 comprises a large portion of the wireless frame. Given the significant overhead associated with transmitting the MAC header, it may be desirable to reduce the size of the MAC header.

FIG. 12A shows one embodiment of a service field 545 that provides for reducing the size of the MAC header 702. The service field 545 of FIG. 12A has been repurposed to store fields previously allocated to the frame control field 710 of MAC Header 702 shown in FIG. 7. The service field 545 of FIG. 12A has been redefined to store a protocol version field 1211, type field 1212, a subtype field 1213, and a to DS field 1214. As shown in FIG. 12A, the protocol version field 1211 utilizes bits 7-8 of the service field 545. The type field 1212 utilizes bits 9-10 of the service field 545. The subtype field utilizes bits 11-14 of the service field 545. The to DS field utilizes bit 15 of the service field 1545.

Because service field 545 of FIG. 12A is defined to store the fields shown, the embodiment utilizing the service field 545 of FIG. 12A may remove these fields from frame control field 710 of MAC header 702, shown in FIG. 7.

FIG. 12B shows exemplary structure of a frame control field 1210 that may be included in a media access control header based on use of the service field 545 of FIG. 12A in a physical header of a wireless frame. Frame control field 1210 includes a From DS field 1215, more fragments field 1216, retry field 1217, power management field 1218, more data field 1219, protected frame field 1220, and order field 1221. When compared to frame control field 810, frame control field 1210 does not include the protocol version field, type field, subtype field, or a to DS field, as these fields are provided by the service field 545 of FIG. 12A. Because the size of the frame control field 1210 is smaller than frame control field 710 and 810 of FIG. 7 and 8 respectively, a corresponding MAC header utilizing the frame control field 1210 will also be reduced in size when compared to the size of MAC header 702 of FIG. 7. This will provide for reduced overhead when transmitting a wireless frame utilizing the frame control field 1210.

FIG. 12C shows an exemplary structure of a wireless frame 1280 that may provide reduced overhead via utilization of a frame control field of reduced size. Wireless frame 1280 is utilizing frame control field 1210 of FIG. 12B, as compared to wireless frame 700 of FIG. 7 which utilizes frame control field 810 of FIG. 8. As a result, wireless frame 1280 may be one byte shorter in length than wireless frame 700. Alternatively, frame body field 1265 may include at least one additional byte of data when compared to frame body field 765 of wireless frame 700. Therefore, wireless frame 1280 may provide reduced overhead when compared to wireless frame 700.

While FIG. 12A-B show one embodiment using the service field 545 to store specific fields from the MAC frame control field 810 of FIG. 8, one of skill in the art would recognize that other fields of the frame control field 810 could also be stored in the service field 545. For example, instead of storing the protocol version 1210, type field 1212, subtype field 1213, and to DS field 1214 in the service field 545, a second embodiment could store a from DS field, more fragments field, a retry field, a power management field, a more data field, a protected frame field, or an order field in the service field 545. Data stored in these fields may correspond to the data stored in from DS field 1215, more fragments field 1216, retry field 1217, power management field 1218, more data field 1219, protected frame field 1220, and order field 1221 of FIG. 12B. This second embodiment of a service field may utilize a frame control field that does not include fields included in the second embodiment's service field.

In other embodiments, any combination of the fields shown in the frame control field 810 of FIG. 8 may be moved from the frame control field 810 to the service field 545. The frame control field used in the MAC header in these embodiments would then contain at least the fields of frame control field 810 that are not stored in the service field. By reducing the size of the frame control field, these embodiments provide an opportunity to reduce the size of a MAC header by incorporating the reduced size frame control field. This may reduce overhead associated with media access control headers when transmitting a wireless frame.

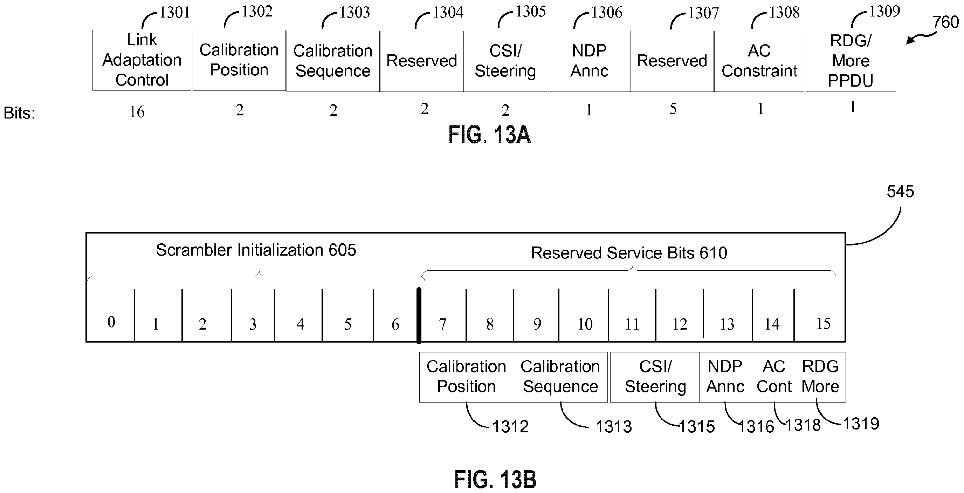

FIG. 13A shows an exemplary structure of a high throughput (HT) control field 760 of the MAC header 702 shown in FIG. 7. As shown, the high throughput (HT) control field 760 includes a link adaptation control field 1301, calibration position field 1302, calibration sequence field 1303, reserved field 1304, CSI/Steering field 1305, NDP Announce field 1306, reserved field 1307, AC Constraint field 1308, and a RDG/ More PPDU field 1309. As defined, the HT control field 760 is four (4) octets, which contributes to the overhead imposed on wireless communication by MAC header 702.

FIG. 13B shows one embodiment of a service field 545 that provides for reducing the size of the MAC header 702. The service field 545 of FIG. 12A has been repurposed to store fields previously allocated to the high throughput control field 760 of MAC header 702.

In the illustrated embodiment, the service field 545 includes a portion of fields included in HT control field 760 of FIG. 13A. These fields include a calibration position field 1312, calibration sequence field 1313, CSI/Steering field 1315, NDP Announcement field 1316, AC Constraint field 1318, and a RDG/More PPDU field 1319. By moving these fields to the service field 545, the fields may be removed from the HT control field in the MAC header.

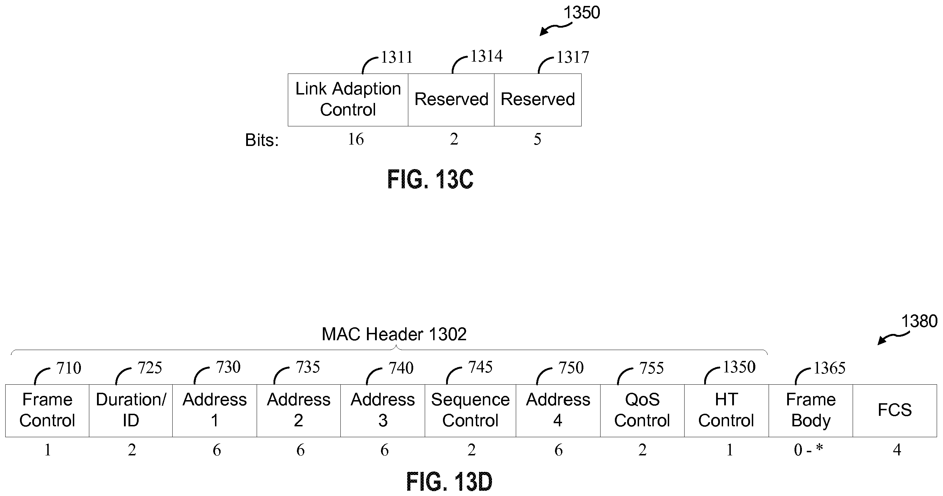

FIG. 13C shows an embodiment of a HT control field 1350 after fields stored in service field 545 of FIG. 13B are removed from HT control field 760. HT control field 1350 includes a link adaption control field 1311, a first reserved field 1314, and a second reserved field 1317. While HT control field 760 is 32 bits in length, HT control field 1350 is 23 bits in length. By using HT control field 1350 instead of HT control field 760, a MAC header size may be reduced by up to nine (9) bits.

In an embodiment, reserved fields 1314 and 1317 may be removed from HT control field 1350. In this embodiment, the HT control field may be further reduced to 16 bits in length. Use of this embodiment's HT control field would reduce the size of a MAC header by 16 bits when compared to a MAC header utilizing HT control field 760 of FIG. 13A. Other embodiments may remove only one of either reserved field 1314 or reserved field 1317 from HT control field 1350.

FIG. 13D shows an exemplary structure of a wireless frame 1380 that may provide reduced overhead via utilization of a HT control field of reduced size. Wireless frame 1380 is utilizing HT control field 1350 of FIG. 13C, as compared to wireless frame 700 of FIG. 7 which utilizes HT control field 760 of FIG. 13A. As a result, wireless frame 1380 may be at least one byte shorter in length than wireless frame 700. Alternatively, frame body field 1365 may include at least one additional byte of data when compared to frame body field 765 of wireless frame 700. In embodiments utilizing an HT control field 1350 that does not include first reserved field 1314 or second reserved field 1317, wireless frame 1380 may be two bytes shorter in length than wireless frame 700. Therefore, wireless frame 1380 may provide reduced overhead when compared to wireless frame 700.

Note that while FIG. 13B shows one embodiment of the use of the service field 545 to store portions of HT control field 760, one with skill in the art would recognize that the particular position of HT control fields in the service field may vary from that disclosed in FIG. 13B. For example, while calibration position field 1312 is shown using bits 7 and 8 of the service field, another embodiment could store calibration position field 1312 using bits 9 and 10 of service field 545. In this embodiment, the calibration sequence field 1313 may be stored in bits 7 and 8 of the service field 545 instead of bits 9 and 10 as illustrated in FIG. 13B. Still other embodiments may store calibration position field 1312 using bits 14 and 15 of the service field 1545. These embodiments may store the AC constraint field 1316 and RDG/More PPDU field 1319 in bits 7 and 8 of the service field 545.

Additionally, while FIG. 13B and FIG. 13C show one specific implementation of use of service field 545 to store a portion of HT control field 760, one with skill in the art will understand that the specific fields of HT control field 760 that are moved to service field 545 may vary by implementation. For example, in an embodiment, a portion of link adaption control field 1301 may be stored in the service field 545. In an embodiment, a portion of link adaption control field 1301 may be stored in the service field, along with other fields from HT control field 760. For example, AC constraint field 1308 may be stored in the service field 545 along with a portion of link adaption control field 1301.

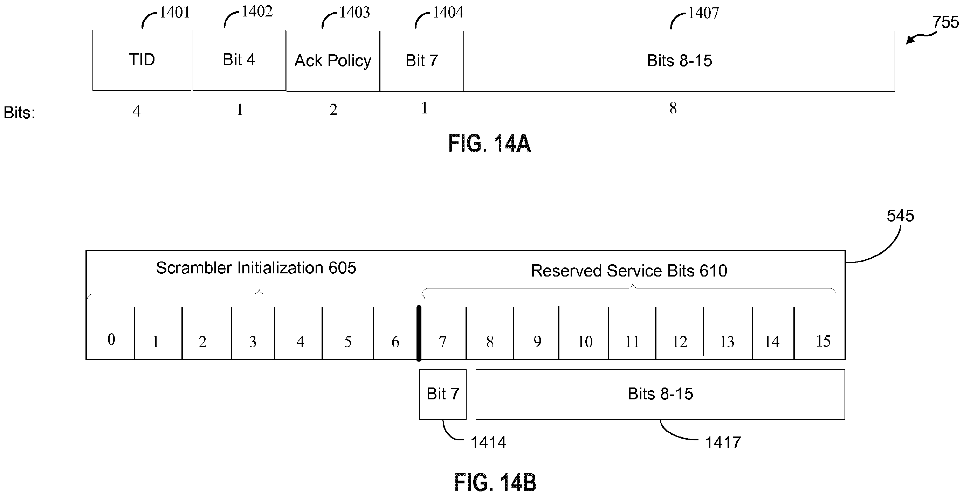

FIG. 14A shows an exemplary structure of a QOS control field 755 of the MAC header 702 shown in FIG. 7. As shown, the QOS control field 755 includes a TID field 1401, a bit 4 field 1402, an ack policy field 1403, a bit 7 field 1404, and a bits 8-15 field 1407. The meaning of the bit 4 field, bit 7 field, and bits 8-15 fields may vary based on at least the MAC frame type field 812, subtype field 813, and the node transmitting the frame. As defined, the QOS control field 755 is two (2) octets, which contributes to the overhead imposed on wireless communication by MAC header 702.

FIG. 14B shows one embodiment of a service field 545 that provides for reducing the size of the MAC header 702. The service field 545 of FIG. 14B has been repurposed to store fields previously allocated to the QOS control field 755 of MAC header 702. In the illustrated embodiment, contents of the bits 8-15 field 1407 of QOS control field 755 may instead be located in the bits 8-15 field 1417, which is shown utilizing bits 8-15 of the service field 545. The bit 7 field 1404 of QOS control field 755 may be located in the bit 7 field 1414, shown utilizing bit 7 of the service field 545 in the illustrated embodiment.

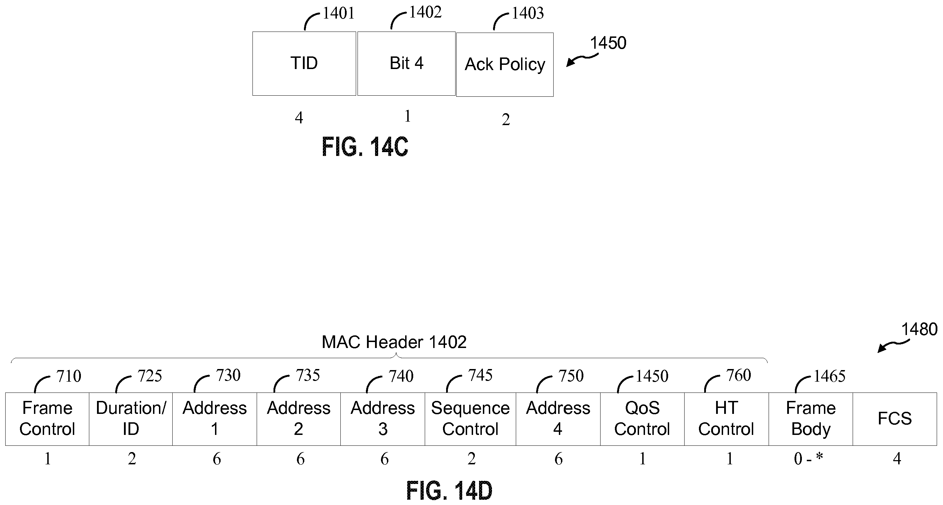

FIG. 14C shows a QOS control field modified based on utilization of the service field 545 as illustrated in FIG. 14B. Because fields 1404 and 1407 of QOS control field 755 may be located in the service field 545 of FIG. 14B, QOS control field 1450 of FIG. 14C may be reduced in size when compared to QOS control field 755 of FIG. 14A and FIG. 7. As shown, QOS control field 1450 includes a TID field 1401, a bit 4 field 1402, and an Ack Policy field 1403. The contents of the fields of QOS control field 1450 may correspond to contents of QOS control field's 755 TID field 1401, Bit 4 field 1402, and ack policy field 1403 respectively. Use of QOS control field 1450 and service field 545 as illustrated in FIG. 14B and 14C may provide for a reduction in the size of a MAC header when compared to MAC header 702 of FIG. 7.

FIG. 14D shows an exemplary structure of a wireless frame 1480 that may provide reduced overhead via utilization of a QOS control field of reduced size. Wireless frame 1480 is utilizing QOS control field 1450 of FIG. 14C, as compared to wireless frame 700 of FIG. 7 which utilizes QOS control field 755 of FIG. 14A. As a result, wireless frame 1480 may be at least one byte shorter in length than wireless frame 700. Alternatively, frame body field 1465 may include at least one additional byte of data when compared to frame body field 765 of wireless frame 700. Therefore, wireless frame 1480 may provide reduced overhead when compared to wireless frame 700.

While FIGS 14B-C illustrate one embodiment utilizing the contents of the service field 545 to indicate one or more fields of the QOS control field 755, other embodiments may vary in which fields of the QOS control field 755 are moved to the service field 545. For example, in another embodiment, the TID field 1401, bit 4 field 1402, or ack policy field 1403 may utilize the service field 545. The QOS control field resulting from use of the service field in this embodiment would differ when compared to the QOS field 1450 illustrated in FIG. 14C. For example, in this embodiment, a QOS control field may include the contents of the bit 7 field 1404 and bits 8-15 field 1407, but would not include the TID field, bit 4 field, or ack policy field.

Additionally, the location of specific QOS fields within the service field 545 may also vary by embodiment. For example, while the bit 7 field 1414 corresponding to the bit 7 field 1404 of QOS control field 755 is shown utilizing bit 7 of the service field 545, in one embodiment the bit 7 field may utilize bit 15 of the service field 545. In this embodiment, the bit 8-15 field 1417 may utilize bits 7-14 of the service field 1545.

While FIGS. 12A-B, 13B-C, and 14B-C have shown how portions of a frame control field 710, HT control field 755, or QOS control field 760 may be moved to the service field 545, one with skill in the art would recognize that any portion of media access control header 702 may be moved to service field 545, providing the size of the portion does not exceed the bits available in service field 545.

In an embodiment, the service field 545 may define new fields not included in media access control header 702. For example, the service field may define a time of last collision, a duration field, or an identifier of the transmitting or receiving device. This identifier may be a portion of or the AID of either the transmitting or the receiving device or a combination of both.

In an embodiment, the identifier may be associated with a group ID of STAs. Based on the group ID, the STAs belonging to the group may either continue decoding the packet or simply discard it. In a further embodiment, the service field may be transmitted at a lower transmission rate than the media access control frame.

In an embodiment, the service field 545 may be included in the media access control frame check sequence, such as FCS field 770. In an embodiment, the scrambler initializer or seed 605 may be included in the media access control frame check sequence.

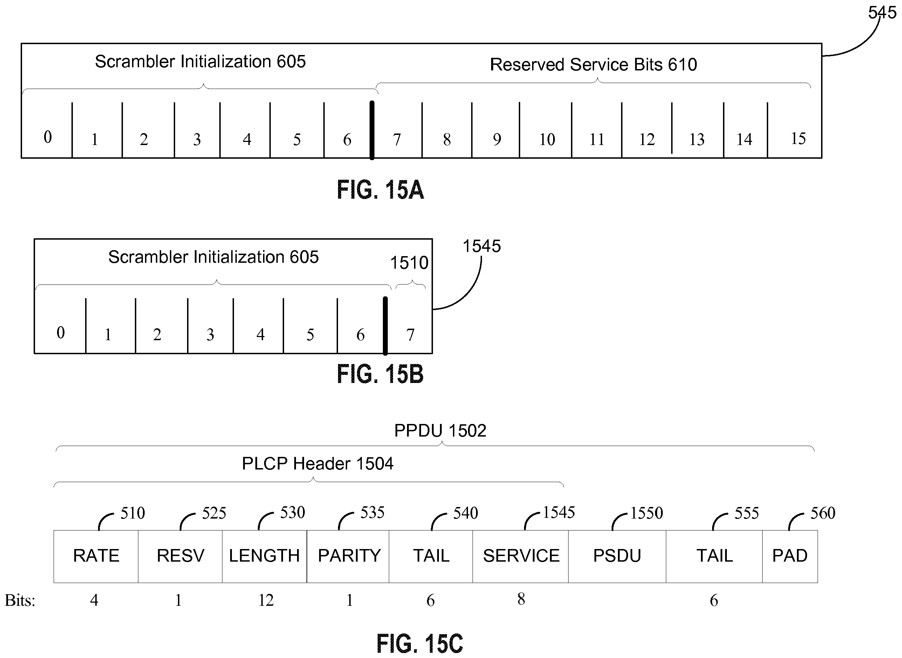

FIG. 15A shows an exemplary structure of a service field 545 as discussed previously. FIG. 15B shows an exemplary structure of a shorted service field 1545. The service field 1545 is shorter than service 545 as a result of the elimination of reserved bits 8-15 in service field 545 from service field 1545. FIG. 15C shows a wireless frame 502 utilizing the reduced size service field 1545. As a result of the elimination of bits 8-15 of service field 545 from service field 1545, the PLCP Header 1504 is one byte shorter in length when compared to PLCP header 504 of FIG. 5. Similarly, wireless frame 1502 may be one byte shorter in length when compared to wireless frame 502 of FIG. 5. Alternatively, the PSDU field 1550 of FIG. 15C may contain one more byte of data than PSDU field 550 of FIG. 5. The reduction in size of service field 1545 compared to service field 545 may result in reduced transmission overhead due to the transmission of physical headers, such as PLCP headers 504 and 1504.

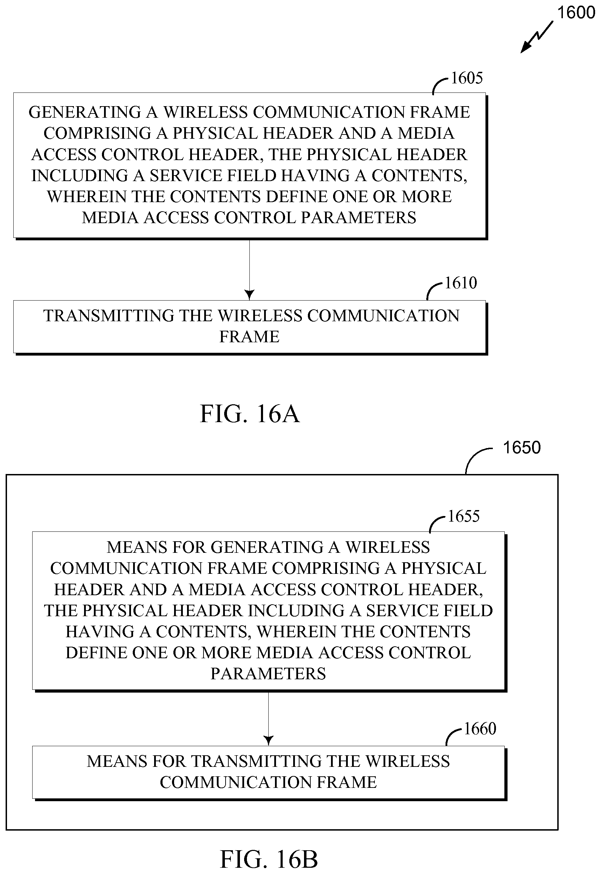

FIG. 16A is a flowchart of an exemplary method 1600 for generating and transmitting a packet with media access control parameters indicated by the service field 545 of the PLCP header 504. The method 1600 may be used to transmit any of the frames (within packets) described above. The frames (within packets) may be generated at either the AP 104 or the STA 106 and transmitted to another node in the wireless network 100. Although the method 1600 is described below with respect to elements of the wireless device 202, those having ordinary skill in the art will appreciate that other components may be used to implement one or more of the steps described herein.

At block 1605, a wireless communication frame is generated that includes a physical header and a media access control header. The physical header includes a service field having a contents. The contents define one or more media access control parameters. In an embodiment, the media access control parameters may include one or more of fields included in a QOS control field 755, HT control field 760, or frame control field 810. In an embodiment, the media access control parameters may include any field of media access control header 702, or any combination of bits of frame 700. The generation may be performed by the processor 204 and/or the DSP 220. At block 1610, the wireless communication frame is transmitted. The transmitter 210 may transmit the media access control frame within a packet. Further, operation of the transmitter 210 may in some aspects be controlled at least in part by the processor 204.

FIG. 16B is a functional block diagram of an exemplary device 1650 that may be employed within the wireless communication system 100. The device 1650 includes means 1655 for generating a wireless communication frame comprising a physical header and a media access control header, wherein the physical header includes a service field having a contents, and the contents define one or more media access control parameters. In an embodiment, means 1655 may be configured to perform one or more of the functions discussed above with respect to block 1605. In an embodiment, the means 1655 for generating a wireless communication frame comprising a physical header and a media access control header may include a processor, such as processor 204 of FIG. 2. Means 1655 may also include one or more of a processor, signal generator, transceiver, decoder, or a combination of hardware and/or software component(s), circuits, and/or module(s). The device 1650 further includes means 1660 for transmitting the wireless communication frame. In an embodiment, means 1660 may be configured to perform one or more of the functions discussed above with respect to block 1610. The means 1660 for transmitting the wireless frame may comprises a transmitter, such as transmitter 210 of FIG. 2. Means 1660 may also include one or more of a processor, signal generator, transceiver, decoder, or a combination of hardware and/or software component(s), circuits, and/or module(s).

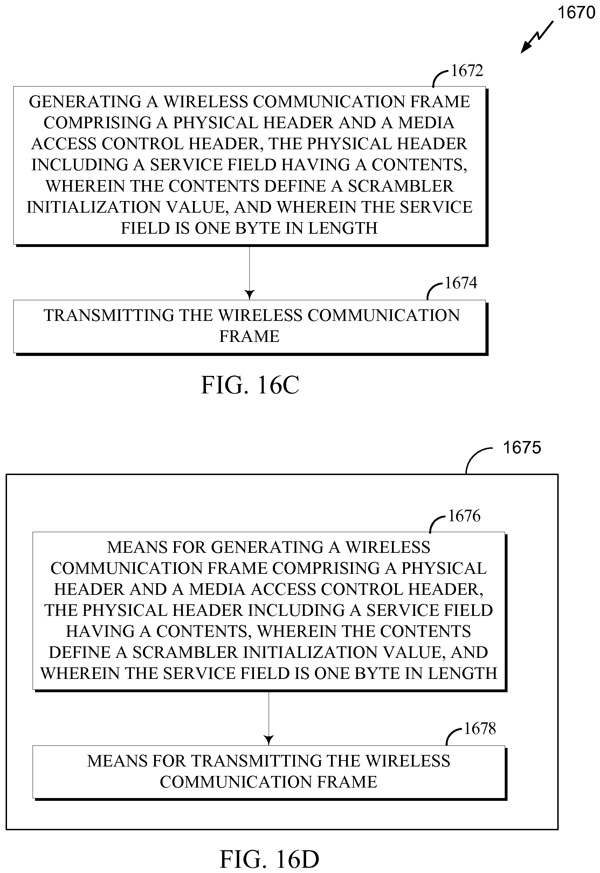

FIG. 16C is a flowchart of an exemplary method 1670 for generating and transmitting a packet with a scrambler initialization value indicated by a one byte service field 1545 of the PLCP header 1504. The method 1670 may be used to transmit any of the frames (within packets) described above. The frames (within packets) may be generated at either the AP 104 or the STA 106 and transmitted to another node in the wireless network 100. Although the method 1670 is described below with respect to elements of the wireless device 202, those having ordinary skill in the art will appreciate that other components may be used to implement one or more of the steps described herein.

At block 1672, a media access control frame is generated that includes a physical header and a media access control header. The physical header includes a service field having a contents. The service field is one byte in length. The contents define a scrambler initialization value. In an embodiment, a portion of a contents of the scrambler initialization value or scrambler seed may define the type of the media access control header. The generation may be performed by the processor 204 and/or the DSP 220. At block 1674, the wireless communication frame is transmitted. The transmitter 210 may transmit the media access control frame within a packet. Further, operation of the transmitter 210 may in some aspects be controlled at least in part by the processor 204.

FIG. 16D is a functional block diagram of an exemplary device 1675 that may be employed within the wireless communication system 100. The device 1675 includes means 1676 for generating a wireless communication frame comprising a physical header and a media access control header, wherein the physical header includes a one byte service field having a contents, and the contents define a scrambler initialization value. In an embodiment, means 1676 may be configured to perform one or more of the functions discussed above with respect to block 1672. In an embodiment, the means 1676 for generating a wireless communication frame comprising a physical header and a media access control header may include a processor, such as processor 204 of FIG. 2. Means 1676 may also include one or more of a processor, signal generator, transceiver, decoder, or a combination of hardware and/or software component(s), circuits, and/or module(s). The device 1675 further includes means 1678 for transmitting the wireless communication frame. In an embodiment, means 1678 may be configured to perform one or more of the functions discussed above with respect to block 1674. The means 1678 for transmitting the wireless frame may comprise a transmitter, such as transmitter 210 of FIG. 2. Means 1678 may also include one or more of a processor, signal generator, transceiver, decoder, or a combination of hardware and/or software component(s), circuits, and/or module(s).

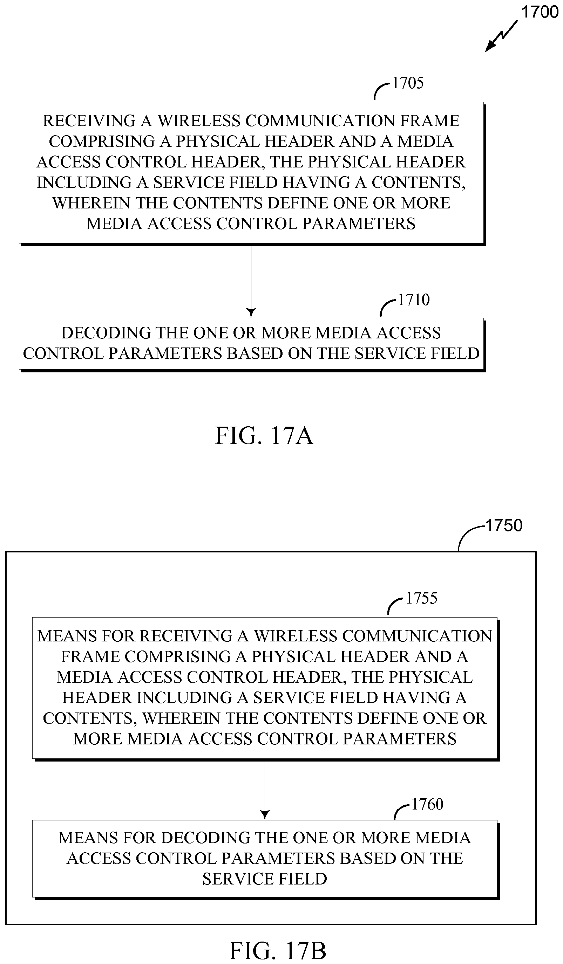

FIG. 17A is a flowchart of an exemplary method 1700 for communicating on a wireless network. The method 1700 may be used to receive any of the frames (within packets) described above. The frames may be received at either the AP 104 or the STA 106 from another node in the wireless network 100. Although the method 1700 is described below with respect to elements of the wireless device 202, those having ordinary skill in the art will appreciate that other components may be used to implement one or more of the steps described herein.

At block 1705, a media access control frame is received. The media access control frame includes a physical header and a media access control header. The physical header includes a service field having a contents. The contents of the service field define one or more media access control parameters. In an embodiment, the media access control parameters may include one or more of the fields included in a QOS control field 755, HT control field 760, or frame control field 810. In an embodiment, the media access control parameters may include any field of media access control header 702, or any combination of bits of frame 700. The reception may be performed by the receiver 212, for example. Further, operation of the receiver 212 may in some aspects be controlled at least in part by the processor 204. At block 1710, the one or more media access control parameters are decoded based on the service field. The decoding may be performed by the processor 204, the signal detector 218, and/or the DSP 220.

FIG. 17B is a functional block diagram of an exemplary device 1750 that may be employed within the wireless communication system 100. The device 1750 includes means 1755 for receiving a wireless communication frame comprising a physical header and a media access control header, wherein the physical header includes a service field having a contents, and the contents define one or more media access control parameters. In an embodiment, means 1755 may be configured to perform one or more of the functions discussed above with respect to block 1705. In an embodiment, the means for receiving a wireless communication frame comprising a physical header and a media access control header, the physical header including a service field having a contents, wherein the contents define one or more media access control parameters may be a receiver, such as receiver 212 of FIG. 2. Means 1755 may also include one or more of a processor, signal generator, transceiver, decoder, or a combination of hardware and/or software component(s), circuits, and/or module(s).

The device 1750 further includes means 1760 for decoding the one or more media access control parameters based on the service field. In an embodiment, means 1760 may be configured to perform one or more of the functions discussed above with respect to block 1710. The means 1760 for decoding the one or more media access control parameters based on the service field may comprises a processor, such as processor 204 of FIG. 2. Means 1760 may also include one or more of a processor, signal generator, transceiver, decoder, or a combination of hardware and/or software component(s), circuits, and/or module(s).

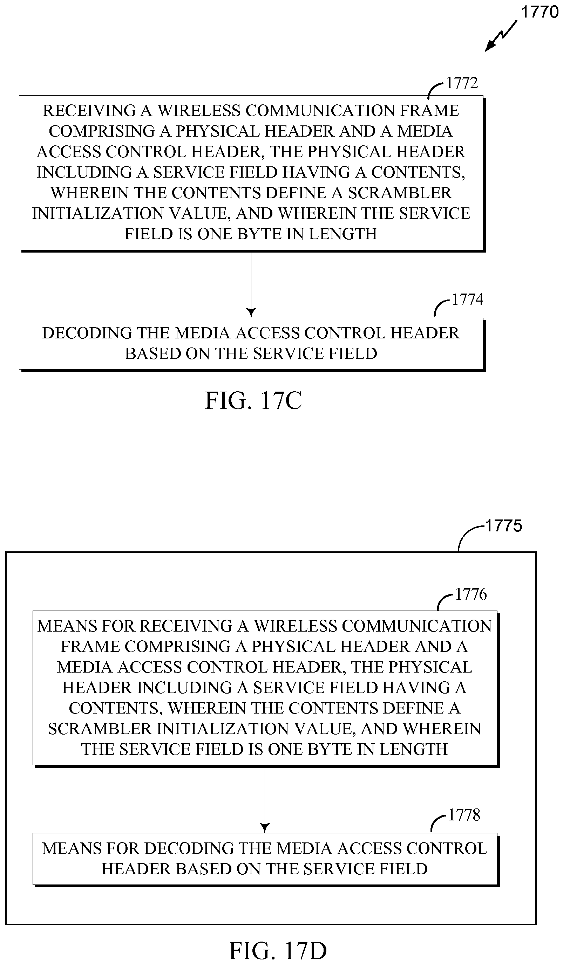

FIG. 17C is a flowchart of an exemplary method 1770 for communicating on a wireless network. The method 1770 may be used to receive any of the frames (within packets) described above. The frames may be received at either the AP 104 or the STA 106 from another node in the wireless network 100. Although the method 1770 is described below with respect to elements of the wireless device 202, those having ordinary skill in the art will appreciate that other components may be used to implement one or more of the steps described herein.

At block 1772, a media access control frame is received. The media access control frame includes a physical header and a media access control header. The physical header includes a service field having a contents. The service field is one byte in length. The contents of the service field define a scrambler initialization value. In an embodiment, a portion of a contents of the scrambler seed or initialization value may define the type of the media access control header.

The reception may be performed by the receiver 212, for example. Further, operation of the receiver 212 may in some aspects be controlled at least in part by the processor 204. At block 1774, the media access control header is decoded based on the service field. The decoding may be performed by the processor 204, the signal detector 218, and/or the DSP 220.

FIG. 17D is a functional block diagram of an exemplary device 1775 that may be employed within the wireless communication system 100. The device 1775 includes means 1776 for receiving a wireless communication frame comprising a physical header and a media access control header, wherein the physical header includes a service field having a contents, and the contents define a scrambler initialization value, wherein the service field is one byte in length. In an embodiment, means 1776 may be configured to perform one or more of the functions discussed above with respect to block 1772. In an embodiment, the means for receiving a wireless communication frame comprising a physical header and a media access control header, the physical header including a service field having a contents, wherein the contents define a scrambler initialization value may include a receiver, such as receiver 212 of FIG. 2. Means 1776 may also include one or more of a processor, signal generator, transceiver, decoder, or a combination of hardware and/or software component(s), circuits, and/or module(s).

The device 1775 further includes means 1778 for decoding the media access control header based on the service field. In an embodiment, means 1778 may be configured to perform one or more of the functions discussed above with respect to block 1774. The means 1778 for decoding the media access control header based on the service field may comprises a processor, such as processor 204 of FIG. 2. Means 1778 may also include one or more of a processor, signal generator, transceiver, decoder, or a combination of hardware and/or software component(s), circuits, and/or module(s).

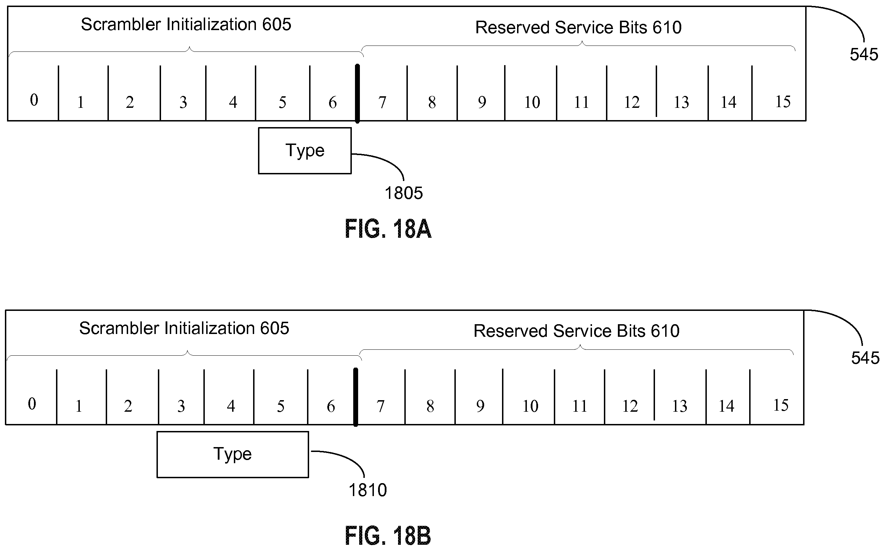

FIG. 18A shows one embodiment of a service field 545 that provides for an indication of a type of a media access control header included in a wireless frame. Bits 0-6 of the service field 545 comprise a scrambler initialization field 605. The service field 545 of FIG. 18A has been repurposed to also store a type field 1805 in bit positions 5 and 6 of the service field 545. Type field 1805 may indicate up to four different types of media access control headers. In embodiments utilizing frame type field 1805, bits 5 and 6 of service field 545 are overloaded, in that they are part of both the scrambler initialization field 605 and the media access control header type field 1805. In these embodiments, the scrambler initialization field generation by a wireless node will be limited based on the type of MAC header included in the wireless frame including type field 1805. At least some implementations may tolerate this reduction in flexibility when choosing a scrambler initialization or seed field value with little or no adverse effects.

FIG. 18B shows another embodiment of a service field 545 that provides for an indication of the type of a media access control header included in a wireless frame. As in FIG. 18A, the type field 1810 is located within the scrambler initialization or seed field 605 of service field 545. In the embodiment of FIG. 18B, the type field 1810 is three bits in length, and positioned at bits 3-5 of the scrambler initialization field 605. Type field 1810 may indicate up to eight different types of MAC headers. As shown by the embodiments illustrated in FIGS. 18A and 18B, the size and location of the type field within the scrambler initialization field contents may vary by implementation. Other implementations not shown may include type fields of one, four, five, six, or seven bits in length. Additionally, the type field may utilize any combination of bits of the scrambler initialization field, whether they are contiguous or non-contiguous.

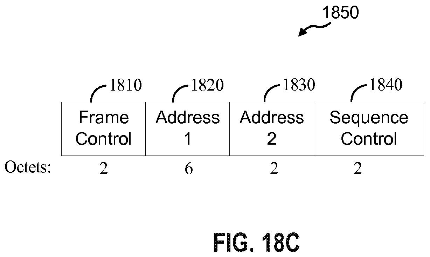

FIG. 18C shows an exemplary structure of a compressed MAC header 1850 for a MAC frame 700 that may be identified using the type field 1805 or type field 1810 of FIGs. 18A and 18B. As shown, the MAC header 1850 includes 4 different fields: a frame control (fc) field 1810, a first address (a1) field 1820, a second address (a2) field 1830, and a sequence control (sc) field 1840. FIG. 18C further indicates the size in octets of each of the fields 1810-1840. Summing the value of all of the field sizes gives the overall size of the MAC header 1850, which is 12 octets (a 66% reduction in size from the MAC header 702 of FIG. 7). As shown, one of the a1 field 820 and the a2 field 830 is 6 octets in length, while the other is 2 octets in length.

FIG. 18C shows just one example of a compressed MAC header 1850 that may be used and indicated by the type fields 1805 or 1810 as described above. It should be appreciated that a variety of different types of compressed MAC headers 1850 may be further within the scope of implementations described herein. For example, different types of MAC headers can be defined for different types of management frames or control frames. By providing a type field using contents of the scrambler initialization field 605, these different types of MAC headers can be identified by receivers.

As described, a receiver 212 may identify the types of theses frames by detecting that the type field 1805 of FIG. 18A or 1810 of FIG. 18B of the service field 545 has a value indicating a first type of frame or a value indicating a second type of frame. For example, the first type of frame may correspond to a frame including a MAC header 702 of FIG. 7. A second type of frame may correspond to a frame including MAC header 1850 of FIG. 18C. Any number of other MAC frame types/formats may further be defined and are within the scope of implementations described herein.

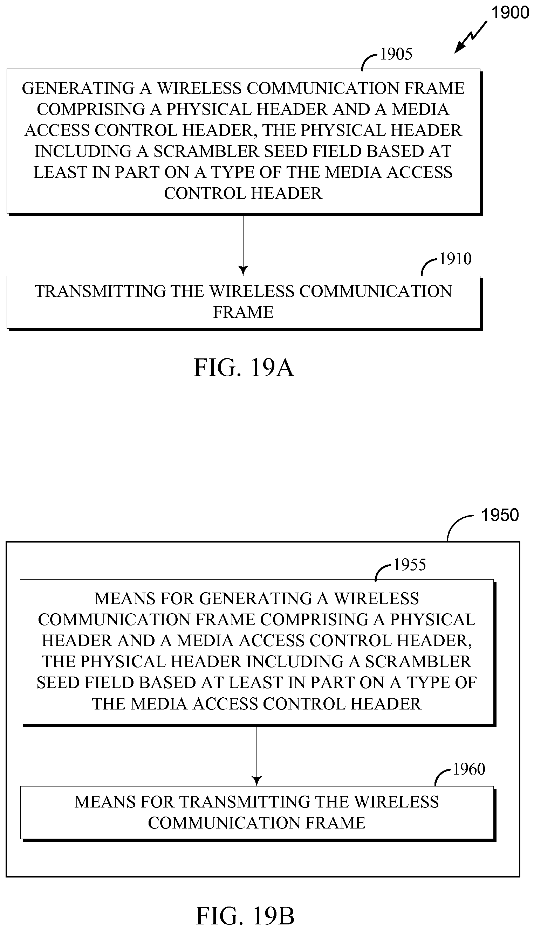

FIG. 19A is a flowchart of an exemplary method 1900 for communicating on a wireless network. The method 1900 may be used to transmit any of the frames (within packets) described above. The frames (within packets) may be generated at either the AP 104 or the STA 106 and transmitted to another node in the wireless network 100. Although the method 1900 is described below with respect to elements of the wireless device 202, those having ordinary skill in the art will appreciate that other components may be used to implement one or more of the steps described herein.

At block 1905, a media access control frame is generated that comprises a physical header and a media access control header. The physical header includes a scrambler seed based at least in part on a type of the media access control header. In an embodiment, a portion of a contents of the scrambler seed may define the type of the media access control header. The generation may be performed by the processor 204 and/or the DSP 220. At block 1910, the media access control frame is transmitted. The transmitter 210 may transmit the media access control frame within a packet. Further, operation of the transmitter 210 may in some aspects be controlled at least in part by the processor 204.

FIG. 19B is a functional block diagram of an exemplary device 1950 that may be employed within the wireless communication system 100. The device 1950 includes means 1955 for generating a wireless communication frame comprising a physical header and a media access control header, wherein the physical header includes a scrambler seed field based at least in part on a type of the media access control header. In an embodiment, means 1955 may be configured to perform one or more of the functions discussed above with respect to block 1905. In an embodiment, the means 1955 for generating a wireless communication frame comprising a physical header and a media access control header may include a processor, such as processor 204 of FIG. 2. Means 1955 may also include one or more of a processor, signal generator, transceiver, decoder, or a combination of hardware and/or software component(s), circuits, and/or module(s).

The device 1950 further includes means 1960 for transmitting the wireless communication frame. In an embodiment, means 1960 may be configured to perform one or more of the functions discussed above with respect to block 1910. The means 1960 for transmitting the wireless frame may comprises a transmitter, such as transmitter 210 of FIG. 2. Means 1960 may also include one or more of a processor, signal generator, transceiver, decoder, or a combination of hardware and/or software component(s), circuits, and/or module(s).

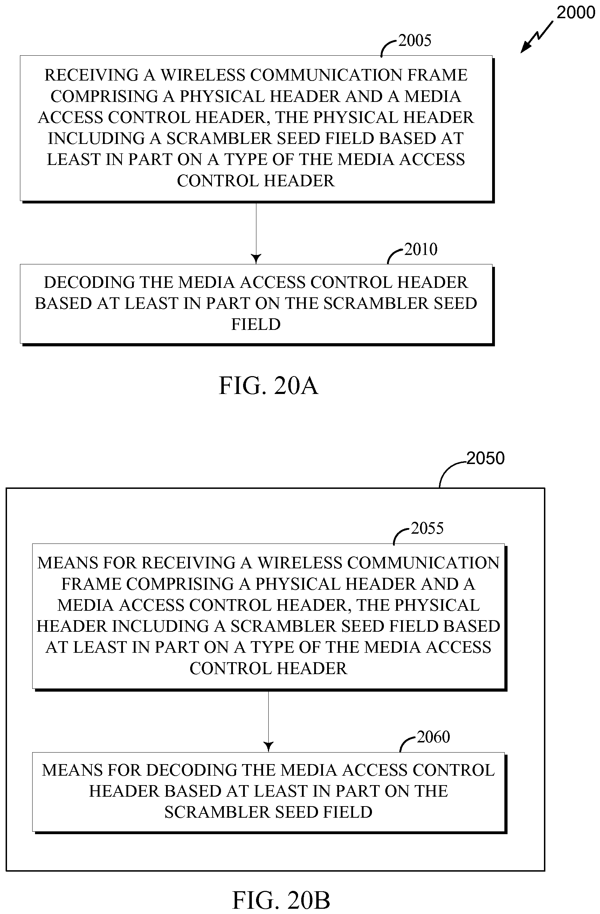

FIG. 20A is a flowchart of an exemplary method 2000 for communicating on a wireless network. The method 2000 may be used to receive any of the frames (within packets) described above. The frames may be received at either the AP 104 or the STA 106 from another node in the wireless network 100. Although the method 2000 is described below with respect to elements of the wireless device 202, those having ordinary skill in the art will appreciate that other components may be used to implement one or more of the steps described herein.

At block 2005, a media access control frame is received. The media access control frame includes a physical header and a media access control header. The physical header includes a scrambler seed field. The scrambler seed has a contents. The contents of the scrambler seed are based on a type of the media access control header. The reception may be performed by the receiver 212, for example. Further, operation of the receiver 212 may in some aspects be controlled at least in part by the processor 204. At block 2010, the media access control header is decoded based at least in part on the scrambler seed field. The decoding may be performed by the processor 204, the signal detector 218, and/or the DSP 220.

FIG. 20B is a functional block diagram of an exemplary device 2050 that may be employed within the wireless communication system 100. The device 2050 includes means 2055 for receiving a wireless communication frame comprising a physical header and a media access control header, wherein the physical header includes a scrambler seed field based on a type of the media access control header. In an embodiment, means 2055 may be configured to perform one or more of the functions discussed above with respect to block 2005. In an embodiment, the means for receiving a wireless communication frame comprising a physical header and a media access control header, the physical header including a scrambler seed field, the scrambler seed field based at least in part on a type of the media access control header may be a receiver, such as receiver 212 of FIG. 2. Means 2055 may also include one or more of a processor, signal generator, transceiver, decoder, or a combination of hardware and/or software component(s), circuits, and/or module(s).

The device 2050 further includes means 2060 for decoding the media access control header based on the scrambler seed field. In an embodiment, means 2060 may be configured to perform one or more of the functions discussed above with respect to block 2010. The means 2060 for decoding the media access control header based at least in part on the scrambler seed field may comprises a processor, such as processor 204 of FIG. 2. Means 2060 may also include one or more of a processor, signal generator, transceiver, decoder, or a combination of hardware and/or software component(s), circuits, and/or module(s).

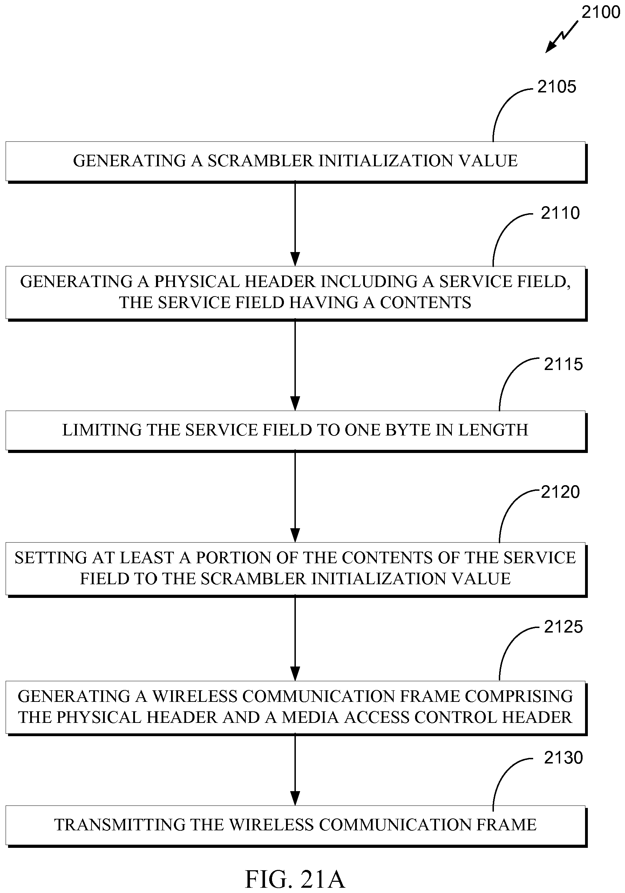

FIG. 21A is a flowchart of an exemplary method 2100 for communicating on a wireless network. The method 2100 may be used to transmit any of the frames (within packets) described above. The frames may be transmitted by either the AP 104 or the STA 106 to another node in the wireless network 100. Although the method 2100 is described below with respect to elements of the wireless device 202, those having ordinary skill in the art will appreciate that other components may be used to implement one or more of the steps described herein.

At block 2105, a scrambler initialization value is generated. In some aspects, the scrambler initialization value is seven bits long. In some aspects, the scrambler initialization value is based on a type of a media access control header. In block 2110, a physical header is generated including a service field. The service field has a contents. In block 2115, the service field is limited to one byte in length. In block 2120, at least a portion of the contents of the service field is set to the scrambler initialization value. In block 2125, a wireless communication frame is generated. The frame includes the physical header and a media access control header. In some aspects, the media access control header may be the same media access control header discussed above with respect to block 2105. In some aspects, a length of the media access control header is based on the type of the media access control header discussed above with respect to block 2105. One or more of blocks 2105-2125 may be performed by the processor 204. In block 2130, the generated wireless communication frame is transmitted on the wireless network. The transmitting may be performed by the transmitter 210.

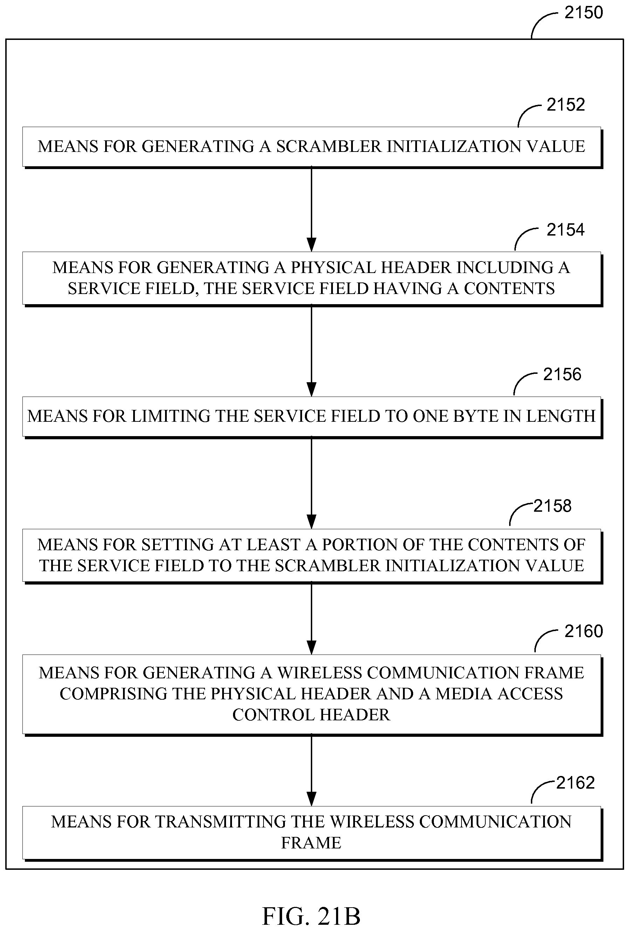

FIG. 21B is a functional block diagram of an exemplary device 2150 that may be employed within the wireless communication system 100. The device 2150 includes means 2152 for generating a scrambler initialization value. In an embodiment, means 2152 may be configured to perform one or more of the functions discussed above with respect to block 2105. In an embodiment, the means for generating a scrambler initialization value 2152 may be a processor, such as processor 204 of FIG. 2. Means 2152 may also include one or more of a processor, signal generator, transceiver, decoder, or a combination of hardware and/or software component(s), circuits, and/or module(s). The device 2150 further includes means 2154 for generating a physical header including a service field, the service field having a contents. In an embodiment, means 2154 may be configured to perform one or more of the functions discussed above with respect to block 2110. In an embodiment, the means for generating a physical header may be a processor, such as processor 204 of FIG. 2. Means 2154 may also include one or more of a processor, signal generator, transceiver, decoder, or a combination of hardware and/or software component(s), circuits, and/or module(s).

The device 2150 further includes means 2156 for limiting the service field to one byte in length. In an embodiment, means 2156 may be configured to perform one or more of the functions discussed above with respect to block 2115. In an embodiment, the means for limiting the service field to one byte in length may be a processor, such as processor 204 of FIG. 2. Means 2156 may also include one or more of a processor, signal generator, transceiver, decoder, or a combination of hardware and/or software component(s), circuits, and/or module(s).

The device 2150 further includes means 2158 for setting at least a portion of the contents of the service field to the scrambler initialization value. In an embodiment, means 2158 may be configured to perform one or more of the functions discussed above with respect to block 2120. In an embodiment, the means for setting at least a portion of the contents of the service field may be a processor, such as processor 204 of FIG. 2. Means 2158 may also include one or more of a processor, signal generator, transceiver, decoder, or a combination of hardware and/or software component(s), circuits, and/or module(s).

The device 2150 further includes means 2160 for generating a wireless communication frame comprising the physical header and a media access control header. In an embodiment, means 2160 may be configured to perform one or more of the functions discussed above with respect to block 2125. In an embodiment, the means for generating a wireless communication frame 2160 may be a processor, such as processor 204 of FIG. 2. Means 2160 may also include one or more of a processor, signal generator, transceiver, decoder, or a combination of hardware and/or software component(s), circuits, and/or module(s).

The device 2150 further includes means 2162 for transmitting the wireless communication frame. In an embodiment, means 2162 may be configured to perform one or more of the functions discussed above with respect to block 2130. In an embodiment, the means for transmitting the wireless communication frame 2162 may be a transmitter, such as transmitter 210 of FIG. 2. Means 2162 may also include one or more of a processor, signal generator, transceiver, decoder, or a combination of hardware and/or software component(s), circuits, and/or module(s).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

## Claims

1. A method (2100) of communicating in a wireless network, the method comprising:
generating (2105) a scrambler initialization value (605);
generating a media access control header (702), the media access control header (702) including a plurality of header fields (710, 725, 730, 735, 740, 745, 750, 755, 760);
generating (2110) a physical header (504) including a service field (545);
limiting (2115) the service field (545) to one byte in length;
setting (2120) at least a portion of the service field (545) to the scrambler initialization value (605);
generating (2125) a wireless communication frame comprising the physical header (504) and the media access control header (702); and
transmitting (2130) the wireless communication frame.

2. The method of claim 1, wherein the scrambler initialization is seven bits long.

3. The method of claim 1, wherein the scrambler initialization value is generated based, at least in part, on a type of the media access control header.

4. The method of claim 3, wherein the size of the media access control header is based on the type.

5. The method of claim 1, further comprising setting at least a second portion of the service field to a cyclic redundancy check value.

6. The method of claim 1, further comprising setting at least a second portion of the service field to a parity value.

7. The method of claim 1, further comprising setting at least a portion of the service field to the media access control header parameter.

8. An apparatus (2150) for communicating in a wireless network, the apparatus comprising:
means (2152) for generating a scrambler initialization value;
means (2154) for generating a physical header (504) including a service field (545);
means (2156) for limiting the service field (545) to one byte in length;
means (2158) for setting at least a portion of the service field (545) to the scrambler initialization value;
means (2160) for generating a wireless communication frame comprising the physical header (504) and a media access control header (702); and
means (2162) for transmitting the wireless communication frame.

9. The apparatus of claim 8, wherein the scrambler initialization value is seven bits long.

10. The apparatus of claim 8, wherein the scrambler initialization value is generated based, at least in part, on a type of the media access control header.

11. The apparatus of claim 10, wherein the means for generating the media access control header is configured to base the size of the media access control header on the type.

12. The apparatus of claim 8, wherein the means for setting is further configured to set at least a second portion of the service field to a cyclic redundancy check value.

13. The apparatus of claim 8, wherein the means for setting is configured to set at least a second portion of the service field to a parity value.

14. The apparatus of claim 8, wherein the means for setting is further configured to set at least a portion of the service field to the media access control header parameter.

15. A computer program comprising executable instructions for causing at least one computer to perform a method according to one of the claims 1 to 7 when executed.

## Patentansprüche

1. Verfahren (2100) zum Kommunizieren in einem drahtlosen Netzwerk, das Verfahren umfassend:
Erzeugen (2105) eines Verwürflerinitialisierungswertes (605);
Erzeugen des Medienzugriffssteuerungskopfes (702), wobei der Medienzugriffssteuerungskopf (702) eine Mehrzahl von Kopffeldern (710, 725, 730, 735, 740, 745, 750, 755, 760) beinhaltet;
Erzeugen (2110) eines physischen Kopfes (504) beinhaltend ein Dienstfeld (545);
Begrenzen (2115) des Dienstfeldes (525) auf eine Länge von einem Byte;
Setzen (2120) wenigstens eines Teils des Dienstfeldes (545) auf den Verwürflerinitialisierungswert (605);
Erzeugen (2125) eines drahtlosen Kommunikationsrahmens umfassend den physischen Kopf (504) und den Medienzugriffssteuerungskopf (702); und
Übermitteln (2130) des drahtlosen Kommunikationsrahmens.

2. Verfahren gemäß Anspruch 1, wobei die Verwürflerinitialisierung sieben Bit lang ist.

3. Verfahren gemäß Anspruch 1, wobei der Verwürflerinitialisierungswert wenigstens teilweise basierend auf einem Typ des Medienzugriffssteuerungskopfes erzeugt wird.

4. Verfahren gemäß Anspruch 3, wobei die Größe des Medienzugriffssteuerungskopfes auf dem Typ basiert.

5. Verfahren gemäß Anspruch 1, weiterhin umfassend Setzen wenigstens eines zweiten Teils des Dienstfeldes auf einen zyklischen Redundanzprüfungswert.

6. Verfahren gemäß Anspruch 1, weiterhin umfassend Setzen wenigstens eines zweiten Teils des Dienstfeldes auf einen Paritätswert.

7. Verfahren gemäß Anspruch 1, weiterhin umfassend Setzen wenigstens eines Teils des Dienstfeldes auf den Medienzugriffssteuerungskopfparameter.

8. Vorrichtung (2150) zum Kommunizieren in einem drahtlosen Netzwerk, die Vorrichtung aufweisend:
Mittel (2152) zum Erzeugen eines Verwürflerinitialisierungswertes;
Mittel (2154) zum Erzeugen eines physischen Kopfes (504) beinhaltend ein Dienstfeld (545);
Mittel (2156) zum Begrenzen des Dienstfeldes (545) auf eine Länge von einem Byte;
Mittel (2158) zum Setzen wenigstens eines Teils des Dienstfeldes (545) auf den Verwürflerinitialisierungswert;
Mittel (2160) zum Erzeugen eines drahtlosen Kommunikationsrahmens umfassend den physischen Kopf (504) und den Medienzugriffssteuerungskopf (702); und
Mittel (2162) zum Übermitteln des drahtlosen Kommunikationsrahmens.

9. Vorrichtung gemäß Anspruch 8, wobei der Verwürflerinitialisierungswert sieben Bit lang ist.

10. Vorrichtung gemäß Anspruch 8, wobei der Verwürflerinitialisierungswert wenigstens teilweise basierend auf einem Typ des Medienzugriffssteuerungskopfes erzeugt wird.

11. Vorrichtung gemäß Anspruch 10, wobei das Mittel zum Erzeugen des Medienzugriffssteuerungskopfes eingerichtet ist, so dass die Größe des Medienzugriffssteuerungskopfes auf dem Typ basiert.

12. Vorrichtung gemäß Anspruch 8, wobei das Mittel zum Setzen weiterhin eingerichtet ist, um wenigstens einen zweiten Teil des Dienstfeldes auf einen zyklischen Redundanzprüfungswert zu setzen.

13. Vorrichtung gemäß Anspruch 8, wobei das Mittel zum Setzen eingerichtet ist, um einen zweiten Teil des Dienstfeldes auf einen Paritätswert zu setzen.

14. Vorrichtung gemäß Anspruch 8, wobei das Mittel zum Setzen weiterhin eingerichtet ist, um wenigstens einen Teil des Dienstfeldes auf den Medienzugriffssteuerungskopfparameter zu setzen.

15. Computerprogram aufweisend ausführbare Anweisungen zum Veranlassen wenigstens eines Computers, um ein Verfahren nach einem der Ansprüche 1 bis 7 durchzuführen, wenn das Computerprogramm ausgeführt wird.

## Revendications

1. Procédé (2100) de communication dans un réseau sans fil, le procédé comprenant :
la génération (2105) d'une valeur d'initialisation de brouilleur (605) ;
la génération d'un en-tête de commande d'accès au support (702), l'en-tête de commande d'accès au support (702) incluant une pluralité de champs d'en-tête (710, 725, 730, 735, 740, 745, 750, 755, 760) ;
la génération (2110) d'un en-tête physique (504) incluant un champ de service (545) ;
la limitation (2115) du champ de service (545) à une longueur d'un octet ;
le paramétrage (2120) d'au moins une partie du champ de service (545) à la valeur d'initialisation de brouilleur (605) ;
la génération (2125) d'une trame de communication sans fil comprenant l'en-tête physique (504) et l'en-tête de commande d'accès au support (702) ; et
la transmission (2130) de la trame de communication sans fil.

2. Procédé selon la revendication 1, dans lequel l'initialisation du brouilleur est longue de sept bits.

3. Procédé selon la revendication 1, dans lequel la valeur d'initialisation de brouilleur est générée sur la base, au moins en partie, d'un type de l'en-tête de commande d'accès au support.

4. Procédé selon la revendication 3, dans lequel la taille de l'en-tête de commande d'accès au support est basée sur le type.

5. Procédé selon la revendication 1, comprenant en outre le paramétrage d'au moins une seconde partie du champ de service à une valeur de contrôle par redondance cyclique.

6. Procédé selon la revendication 1, comprenant en outre le paramétrage d'au moins une seconde partie du champ de service à une valeur de parité.

7. Procédé selon la revendication 1, comprenant en outre le paramétrage d'au moins une partie du champ de service au paramètre d'en-tête de commande d'accès au support.

8. Appareil (2150) de communication dans un réseau sans fil, l'appareil comprenant :
un moyen (2152) pour générer une valeur d'initialisation de brouilleur ;
un moyen (2154) pour générer un en-tête physique (504) incluant un champ de service (545) ;
un moyen (2156) pour limiter le champ de service (545) à une longueur d'un octet ;
un moyen (2158) pour paramétrer au moins une partie du champ de service (545) à la valeur d'initialisation de brouilleur ;
un moyen (2160) pour générer une trame de communication sans fil comprenant l'en-tête physique (504) et un en-tête de commande d'accès au support (702) ; et
un moyen (2162) pour transmettre la trame de communication sans fil.

9. Appareil selon la revendication 8, dans lequel la valeur d'initialisation de brouilleur est longue de sept bits.

10. Appareil selon la revendication 8, dans lequel la valeur d' initialisation de brouilleur est générée sur la base, au moins en partie, d'un type de l'en-tête de commande d'accès au support.

11. Appareil selon la revendication 10, dans lequel le moyen de génération de l'en-tête de commande d'accès au support est configuré pour baser la taille de l'en-tête de commande d'accès au support sur le type.

12. Appareil selon la revendication 8, dans lequel le moyen de paramétrage est en outre configuré pour paramétrer au moins une seconde partie du champ de service à une valeur de contrôle par redondance cyclique.

13. Appareil selon la revendication 8, dans lequel le moyen de paramétrage est configuré pour paramétrer au moins une seconde partie du champ de service à une valeur de parité.

14. Appareil selon la revendication 8, dans lequel le moyen de paramétrage est en outre configuré pour paramétrer au moins une partie du champ de service au paramètre d'en-tête de commande d'accès au support.

15. Programme d'ordinateur comprenant des instructions exécutables pour amener au moins un calculateur à mettre en ouvre un procédé selon l'une quelconque des revendications 1 à 7 lorsqu'elles sont exécutées.
